# EUROPEAN PATENT SPECIFICATION

(11) **EP 4 325 980 B1**
(45) Date of publication and mention of the grant of the patent: **03.06.2026**
(21) Application number: 23219412.6
(22) Date of filing: 09.03.2022
(51) Int. Cl.: H04W 74/00, H04L 1/1829

(54) **TERMINAL APPARATUS, BASE STATION APPARATUS, AND COMMUNICATION METHOD**
ENDGERÄTEVORRICHTUNG, BASISSTATIONSVORRICHTUNG UND KOMMUNIKATIONSVERFAHREN
APPAREIL TERMINAL, APPAREIL DE STATION DE BASE ET PROCÉDÉ DE COMMUNICATION

(30) Priority: 22.12.2021 JP 2021208479
(43) Date of publication of application: 21.02.2024
(62) Divisional of application: 22161002.5
(73) Proprietor: Sharp Kabushiki Kaisha, Sakai-ku Sakai-shi, Osaka 590-8522 (JP)
(72) Inventor: SHIRAKAWA, Atsushi, Sakai City, Osaka, 590-8522 (JP); NAMBA, Hideo, Sakai City, Osaka, 590-8522 (JP); TOMEBA, Hiromichi, Sakai City, Osaka, 590-8522 (JP)
(74) Representative: Müller Hoffmann & Partner

(56) References cited:
- WO-A1-2021/096838

## Description

### Technical Field

The present invention relates to a terminal apparatus, a base station apparatus, and a communication method.

### Background Art

The Institute of Electrical and Electronics Engineers Inc. (IEEE) has been continuously working on updating of the IEEE 802.11 specification that is a wireless Local Area Network (LAN) standard in order to achieve an increase in speed and frequency efficiency of the wireless LAN network. In a wireless LAN, it is possible to perform radio communication using unlicensed bands that can be used without being allowed (licensed) by nations or regions. For applications for individuals, such as domestic use, Internet accesses from inside residences has been wirelessly established by, for example, including wireless LAN access point functions in line termination apparatuses for connection to a Wide Area Network (WAN) line such as the Internet or connecting wireless LAN access point apparatuses (APs) to line termination apparatuses. In other words, wireless LAN station apparatuses (STAs) such as smartphones and PCs can associate to wireless LAN access point apparatuses and access the Internet.

Designing of the specification of IEEE 802.11ax has been completed in February 2021, and wireless LAN devices that are compliant with the specification and communication devices such as smartphones and Personal Computers (PCs) with wireless LAN devices equipped therein have appeared on the market as products that are compliant with Wi-Fi6 (trade name; a name for IEEE-802.11ax compliant products certified by the Wi-Fi Alliance). Also, activities for standardizing IEEE 802.11be as a standard subsequent to IEEE 802.11ax has been started in recent days. With the rapid distribution of wireless LAN devices, further improvement in throughput per user in environments where wireless LAN devices are densely disposed has been studied in the standardization of IEEE 802.11be.

According to the IEEE 802.11 standard, error control has been introduced as a throughput speed-up technology. Error control is roughly categorized into Forward Error Correction (FEC) and Automatic repeat request (ARQ). Forward error correction is a scheme in which an error caused in a transmission path is corrected on a reception end using an error correction code and does not require a retransmission request to a transmission end in a case that a codeword block has been accurately recovered. Although an error correction capability is improved by increasing a proportion of redundant bits occupying a codeword, there is a trade-off relationship with an increase in decoding processing, degradation of transmission efficiency, and the like. On the other hand, ARQ is a scheme that requests the transmission end to retransmit a codeword block that has not been accurately decoded on the reception end. An error of the codeword block at the time of the decoding is detected through Medium Access Control (MAC) on the reception end and is discarded without being accumulated in a buffer. An Acknowledgement (ACK) is sent to the transmission end in a case that the codeword block has been decoded normally, while a Negative Acknowledgement (NACK) is sent to the transmission end in a case that an error of the codeword block has been detected. Processing of retransmitting the codeword block is performed by ARQ in a case that an NACK is sent to the transmission end or in a case that an ACK has not been transmitted to the transmission end for a certain period. In addition to the aforementioned error control based on the IEEE 802.11 standard, Hybrid ARQ (HARQ) as a combination of a forward error correction code and ARQ has been studied in the activities for standardizing IEEE 802.11be. For HARQ, Chase combining of improving a Signal to Noise power ratio (SNR) of a received signal by transmitting the same codeword blocks at the time of retransmission and combining codeword blocks on the reception end and Incremental redundancy (IR) combining of enhancing error correction decoding capability on the reception end by newly transmitting a redundancy signal (parity signal) at the time of retransmission have widely been studied.

According to the IEEE 802.11n and following standards, a mechanism of frame aggregation has been introduced as a throughput speed-up technology through reduction of an overhead. Frame aggregation is roughly classified into an Aggregated MAC Service Data Unit (A-MSDU) and an Aggregated MAC Protocol Data Unit (A-MPDU). While the frame aggregation enables transmission of a large amount of data at once and improves the transmission efficiency, the probability of a transmission error is increased. Thus, IEEE 802.11ax and following standards are expected to include efficient error control on each MPDU in addition to improvement of transmission efficiency through frame aggregation as the main underlying technologies for increasing the speed of throughput. Thus, an improvement in the transmission quality can be expected by obtaining time diversity based on HARQ in the activities for standardizing IEEE 802.11be.

Document WO 2021/096838 A1 discloses systems, methods, and apparatus, including computer programs encoded on computer-readable media, for priority access on a shared wireless channel. A priority station (STA), an access point (AP), or a network operator may activate a priority access service. The priority access service provides priority access to authorize priority STAs by allowing them to use more aggressive contention parameters for contention-based access of the wireless channel as compared to other STAs. In some implementations, non-priority STAs may be configured with weakened contention parameters to increase or ensure the likelihood that a priority STA will win contention for access to the wireless channel.

### Citation List

### Non Patent Literature

NPL 1: IEEE 802.11-20/1046-08-0be, July. 2020

### Summary of Invention

### Technical Problem

In the activities for standardizing IEEE 802.11be, application of wireless LAN communication technology to an application requiring high reliability and low delay such as a Time Sensitive Network (TSN) has also been considered in a standardization target range. The restricted TWT technology proposed in NPL 1 is based on Target Wake Time (TWT) technology of IEEE 802.11ax and is scheduled to be introduced into Release 1 of IEEE 802.11be as well. Because a start of a TWT Service Period (SP) of the TWT technology in the related art is determined by Network Allocation Vector (NAV) Protection using mechanisms of Request To send/Clear To Send (RTS/CTS) and self-CTS, the start time of the TWT SP may not be able to be accurately predicted due to a delay or jitter in a case that a radio medium is used by other communications. According to Restricted TWT, a delay and a jitter that the start time of the TWT SP suffers are minimized to further enhance a low delay through adjustment such that a Transmission OPportunity (TXOP) for other communications is ended before the start of the TWT SP. However, in this mechanism, a station apparatus ensures the TXOP by TWT SP determined by an access point apparatus initiative. In other words, because there is a time difference between the start of TXOP SP and a timing from which a station apparatus can actually transmit data, it may not be possible to cancel out a delay corresponding to the time difference, and a sufficiently low delay may not be achieved.

The present invention is made in view of such circumstances and discloses a communication apparatus and a communication method enabling higher-performance low-delay communication by a station apparatus taking initiative in ensuring, with priority, TXOP for transmitting data regarding the station apparatus instead of the station apparatus using or sharing TXOP ensured by an access point apparatus.

### Solution to Problem

The invention is defined by the independent claims. Embodiments are defined by the dependent claims.

### Advantageous Effects of Invention

The present invention can contribute to an improvement in high-reliability communication and low-delay communication in the IEEE 802.11 standard.

### Brief Description of Drawings

FIG. 1 is an overview diagram illustrating examples of splitting radio resources according to an aspect of the present invention.
FIG. 2 is a diagram illustrating an example of a frame configuration according to an aspect of the present invention.
FIG. 3 is a diagram illustrating an example of a frame configuration according to an aspect of the present invention.
FIG. 4 is a diagram illustrating an example of communication according to an aspect of the present invention.
FIG. 5 is a diagram illustrating a configuration example of a communication system according to an aspect of the present invention.
FIG. 6 is a block diagram illustrating a configuration example of a radio communication apparatus according to an aspect of the present invention.
FIG. 7 is a block diagram illustrating a configuration example of a radio communication apparatus according to an aspect of the present invention.
FIG. 8 is an overview diagram illustrating an example of a coding scheme according to an aspect of the present invention.
FIG. 9 is an overview diagram illustrating an example of a frame format according to an aspect of the present invention.
FIG. 10 is an overview diagram of radio frame transmission according to an aspect of the present invention.
FIG. 11 is a control sequence diagram between radio communication apparatuses according to an aspect of the present invention.
FIG. 12 is a priority right table according to an aspect of the present invention.
FIG. 13 is a control sequence diagram between radio communication apparatuses according to an aspect of the present invention.

### Description of Embodiments

A communication system according to the present embodiment includes an access point apparatus (or also referred to as a base station apparatus) and a plurality of station apparatuses (or also referred to as a plurality of terminal apparatuses). Also, the communication system and a network including the access point apparatus and the station apparatus will be referred to as a Basic service set (BSS: management range or cell). In addition, the station apparatus according to the present embodiment can include function of access point apparatus. Similarly, the access point apparatus according to the present embodiment can include function of the station apparatus. Therefore, in a case that a communication apparatus is simply mentioned below, the communication apparatus can indicate both the station apparatus and the access point apparatus.

The base station apparatus and the terminal apparatus in the BSS are assumed to perform communication based on Carrier sense multiple access with collision avoidance (CSMA/CA). Although an infrastructure mode in which the base station apparatus performs communication with the plurality of terminal apparatuses is targeted in the present embodiment, the method of the present embodiment can also be performed in an ad hoc mode in which the terminal apparatuses perform communication directly with each other. In the ad hoc mode, the terminal apparatus forms the BSS instead of the base station apparatus. The BSS in the ad hoc mode will also be referred to as an Independent Basic Service Set (IBSS). In the following description, a terminal apparatus that forms the IBSS in the ad hoc mode can also be regarded as a base station apparatus. The method of the present embodiment can also be performed in Peer to peer (P2P) communication in which the terminal apparatuses perform communication directly with each other. One of methods for performing P2P communication is Tunneled Direct Link Setup (TDLS). In TDLS, traffic flowing between terminal apparatuses associated to the base station apparatus is directly transmitted and/or received between the terminal apparatuses without intervention of the base station apparatus. The method of the present embodiment can also be performed in Wi-Fi Direct (trade name). In Wi-Fi Direct, the terminal apparatus forms a Group instead of the base station apparatus. Hereinafter, a terminal apparatus as a Group owner forming a Group in Wi-Fi Direct can also be regarded as a base station apparatus.

In an IEEE 802.11 system, each apparatus can transmit transmission frames of a plurality of frame types with a common frame format. Each transmission frame is defined by a physical (PHY) layer, a Medium access control (MAC) layer, and a Logical Link Control (LLC) layer. The physical layer will also be referred to as a PHY layer, and the medium access control layer will also be referred to as a MAC layer.

A transmission frame of the PHY layer will be referred to as a physical protocol data unit (PPDU: PHY protocol data unit or physical layer frame). The PPDU includes a physical layer header (PHY header) including header information and the like for performing signal processing in the physical layer, a physical service data unit (PSDU: PHY service data unit or MAC layer frame) that is a data unit processed in the physical layer, and the like. The PSDU can include an Aggregated MPDU (A-MPDU) in which a plurality of MAC protocol data units (MPDUs) as a retransmission unit in a radio section are aggregated.

The PHY header includes reference signals such as a Short training field (STF) used for detection, synchronization, and the like of signals, a Long training field (LTF) used for obtaining channel information for demodulating data, and the like and a control signal such as a Signal (SIG) including control information for demodulating data. Also, the STF is classified into a Legacy-STF (L-STF), a High throughput-STF (HT-STF), a Very high throughput-STF (VHT-STF), a High efficiency-STF (HE-STF), an Extremely High Throughput-STF (EHT-STF), and the like in accordance with compliant standards, and the LTF and the SIG are also similarly classified into an L-LTF, an HT-LTF, a VHT-LTF, an HE-LTF, an L-SIG, an HT-SIG, a VHT-SIG, an HE-SIG, and an EHT-SIG. The VHT-SIG is further classified into VHT-SIG-A1, VHT-SIG-A2, and VHT-SIG-B. Similarly, the HE-SIG is classified into HE-SIG-A1 to 4 and HE-SIG-B. On the assumption of updating of technologies in the same standard, a Universal SIGNAL (U-SIG) field including additional control information can be included.

Furthermore, the PHY header can include information for identifying a BSS of a transmission source of the transmission frame (hereinafter, also referred to as BSS identification information). The information for identifying the BSS can be a Service Set Identifier (SSID) of the BSS or a MAC address of a base station apparatus of the BSS. Also, the information for identifying the BSS can be a value unique to the BSS (such as a BSS color, for example) other than the SSID and the MAC address.

The PPDU is modulated in accordance with the compliant standard. In the IEEE 802.11n standard, for example, the PPDU is modulated into an Orthogonal frequency division multiplexing (OFDM) signal.

The MPDU includes a MAC layer header (MAC header) including header information and the like for performing signal processing in the MAC layer, a MAC service data unit (MSDU) that is a data unit processed in the MAC layer or a frame body, and a Frame check sequence (FCS) for checking whether there is an error in the frame. Also, a plurality of MSDUs can be aggregated as an Aggregated MSDU (A-MSDU).

The frame types of transmission frames of the MAC layer are roughly classified into three frame types, namely a management frame for managing an association state and the like between apparatuses, a control frame for managing a communication state between apparatuses, and a data frame including actual transmission data, and each frame type is further classified into a plurality of subframe types. The control frame includes an Acknowledge (Ack) frame, a Request to send (RTS) frame, a Clear to send (CTS) frame, and the like. The management frame includes a Beacon frame, a Probe request frame, a Probe response frame, an Authentication frame, an Association request frame, an Association response frame, and the like. The data frame includes a Data frame, a polling (CF-poll) frame, and the like. Each apparatus can recognize a frame type and a subframe type of a received frame by reading detail of the frame control field included in a MAC header.

Note that Ack may include Block Ack. Block Ack can perform a reception completion notification to a plurality of MPDUs. Also, Ack may include Multi STA Block Ack (M-BA) including a reception completion notification to a plurality of communication apparatuses.

The beacon frame includes a Field in which an interval at which a beacon is transmitted (Beacon interval) and an SSID are stated. The base station apparatus can periodically notify the BSS of the beacon frame, and each terminal apparatus can recognize the base station apparatus in the surroundings of the terminal apparatus by receiving the beacon frame. The action of the terminal apparatus recognizing the base station apparatus based on the beacon frame broadcast from the base station apparatus will be referred to as Passive scanning. On the other hand, an action of the terminal apparatus searching for the base station apparatus by broadcasting a probe request frame in the BSS will be referred to as Active scanning. The base station apparatus can transmit a probe response frame as a response to the probe request frame, and detail described in the probe response frame is equivalent to that in the beacon frame.

The terminal apparatus recognizes the base station apparatus and performs processing to establish association with the base station apparatus. The association processing is classified into an Authentication procedure and an Association procedure. The terminal apparatus transmits an authentication frame (authentication request) to the base station apparatus with which association is desired. Once the base station apparatus receives the authentication frame, then the base station apparatus transmits, to the terminal apparatus, an authentication frame (authentication response) including a status code indicating whether authentication can be made for the terminal apparatus. The terminal apparatus can determine whether the terminal apparatus has been authenticated by the base station apparatus by reading the status code described in the authentication frame. Note that the base station apparatus and the terminal apparatus can exchange the authentication frame a plurality of times.

After the authentication procedure, the terminal apparatus transmits an association request frame to the base station apparatus in order to perform the association procedure. Once the base station apparatus receives the association request frame, the base station apparatus determines whether to allow the association of the terminal apparatus and transmits an association response frame to provide a notification regarding the determination. In the association response frame, an Association identifier (AID) for identifying the terminal apparatus is described in addition to a status code indicating whether to perform the association processing. The base station apparatus can manage a plurality of terminal apparatuses by configuring different AIDs for the terminal apparatuses for which the base station apparatus has allowed association.

After the association processing is performed, the base station apparatus and the terminal apparatus perform actual data transmission. In the IEEE 802.11 system, a Distributed Coordination Function (DCF), a Point Coordination Function (PCF), and a function in which the DCF and the PCF are enhanced (an Enhanced distributed channel access (EDCA), a Hybrid coordination function (HCF), and the like) are defined. Although a case that the base station apparatus transmits signals to the terminal apparatus using the DCF will be described below as an example, the same also applies to a case that the terminal apparatus transmits signals to the base station apparatus using the DCF.

In the DCF, the base station apparatus and the terminal apparatus perform Carrier sense (CS) for checking a utilization condition of a radio channel in the surroundings of the apparatuses themselves prior to communication. In a case that the base station apparatus that is a transmitting station receives a signal in a level that is higher than a predefined Clear channel assessment level (CCA level) in the radio channel, transmission of the transmission frame through the radio channel is postponed. Hereinafter, a state in which a signal in a level that is equal to or higher than the CCA level is detected in the radio channel will be referred to as a Busy state, and a state in which a signal in a level that is equal to or higher than the CCA level is not detected will be referred to as an Idle state. In this manner, CS performed based on a power (received power level) of a signal actually received by each apparatus will be referred to as physical carrier sense (physical CS). Note that the CCA level will also be referred to as a carrier sense level (CS level) or a CCA threshold (CCAT). Note that in a case that a signal in a level that is equal to or higher than the CCA level is detected, the base station apparatus and the terminal apparatus start to perform an operation of demodulating at least a signal of the PHY layer.

The base station apparatus performs carrier sense corresponding to an Inter frame space (IFS) in accordance with the type of transmission frame to be transmitted and determines which of the busy state and the idle state the radio channel is. The period during which the base station apparatus performs carrier sense differs depending on the frame type and the subframe type of transmission frame to be transmitted by the base station apparatus from now on. In the IEEE 802.11 system, a plurality of IFSs with different periods are defined, and there are a short frame interval (Short IFS: SIFS) used for a transmission frame to which the highest priority is given, a polling frame interval (PCF IFS: PIFS) used for a transmission frame with relatively high priority, a distributed control frame interval (DCF IFS: DIFS) used for a transmission frame with the lowest priority, and the like. In a case that the base station apparatus transmits a data frame with the DCF, the base station apparatus uses the DIFS.

The base station apparatus waits for DIFS and then further waits for a random backoff time to prevent frame collision. In the IEEE 802.11 system, a random backoff time called a Contention window (CW) is used. CSMA/CA is based on the assumption that a transmission frame transmitted by a certain transmitting station is received by a receiving station in a state with no interference from other transmitting stations. Therefore, in a case that transmitting stations transmit transmission frames at the same timing, the frames collide against each other, and the receiving station cannot receive them properly. Thus, each transmitting station waits for a randomly configured time before starting the transmission, such that the collision of the frames is avoided. In a case that the base station apparatus determines, through carrier sense, that a radio channel is in an idle state, the base station apparatus starts to count down CW and acquires a transmission right for the first time after CW becomes zero and can transmit the transmission frame to the terminal apparatus. Note that in a case that the base station apparatus determines through the carrier sense that the radio channel is in the busy state during the counting-down of CW, the base station apparatus stops the counting-down of CW. In a case that the radio channel is brought into the idle state, then the base station apparatus restarts the counting-down of the remaining CW after the previous IFS.

Next, details of frame reception will be described. A terminal apparatus that is a receiving station receives a transmission frame, reads a PHY header of the transmission frame, and demodulates the received transmission frame. Then, the terminal apparatus can recognize whether the transmission frame is directed to the terminal apparatus by reading a MAC header of the demodulated signal. Note that the terminal apparatus can also determine the destination of the transmission frame based on information described in the PHY header (for example, a Group identifier (Group ID: GID) listed in the VHT-SIG-A).

In a case that the terminal apparatus determines that the received transmission frame has been directed to the terminal apparatus and has been able to demodulate the transmission frame without any error, the terminal apparatus has to transmit, to the base station apparatus that is the transmitting station, an ACK frame indicating that the frame has been properly received. The ACK frame is one of transmission frames with the highest priority transmitted only after the waiting for the SIFS period (with no random backoff time). The base station apparatus ends the series of communication in response to reception of the ACK frame transmitted from the terminal apparatus. Note that in a case that the terminal apparatus has not been able to receive the frame properly, the terminal apparatus does not transmit ACK. Thus, the base station apparatus ends the communication on the assumption that the communication has been failed in a case that the ACK frame has not been received from the receiving station for a certain period (SIFS + ACK frame length) after the transmission of the frame. In this manner, end of single communication (also called a burst) of the IEEE 802.11 system is always determined based on whether the ACK frame has been received except for special cases such as a case of transmission of a broadcast signal such as a beacon frame and a case that fragmentation for splitting transmission data is used.

In a case that the terminal apparatus determines that the received transmission frame has not been directed to the terminal apparatus, the terminal apparatus configures a Network allocation vector (NAV) based on the Length of the transmission frame described in the PHY header or the like. The terminal apparatus does not attempt communication during a period configured in the NAV. In other words, because the terminal apparatus performs the same operation as in a case that the physical CS determines that the radio channel is in the busy state for a period configured in the NAV, the communication control based on the NAV is also called virtual carrier sense (virtual CS). The NAV is also configured by a Request to send (RTS) frame and a Clear to send (CTS) frame, which are introduced to solve a hidden terminal problem in addition to the case that the NAV is configured based on the information described in the PHY header.

Compared to the DCF in which each apparatus performs carrier sense and autonomously acquires a transmission right, the PCF controls a transmission right of each apparatus inside the BSS using a control station called a Point coordinator (PC). In general, the base station apparatus serves as a PC and acquires a transmission right of the terminal apparatus inside the BSS.

A communication period using the PCF includes a Contention free period (CFP) and a Contention period (CP). During the CP, communication is performed based on the aforementioned DCF, and the PC controls the transmission right during the CFP. The base station apparatus that is a PC broadcasts a beacon frame with description of a CFP period (CFP Max duration) and the like in the BSS prior to a communication with the PCF. Note that the PIFS is used to transmit the beacon frame broadcast at the time of a start of transmission with the PCF, and the beacon frame is transmitted without waiting for CW. The terminal apparatus that has received the beacon frame configures the period of CFP described in the beacon frame to the NAV. Hereinafter, the terminal apparatus can acquire the transmission right only in a case that a signal (a data frame including CF-poll, for example) that performs signalling an acquisition of a transmission right transmitted by the PC is received, until the NAV elapses or a signal (a data frame including CF-end, for example) that broadcasts the end of the CFP in the BSS is received. Note that because no frame collision occurs inside the same BSS during the CFP period, each terminal apparatus does not take a random backoff time used in the DCF.

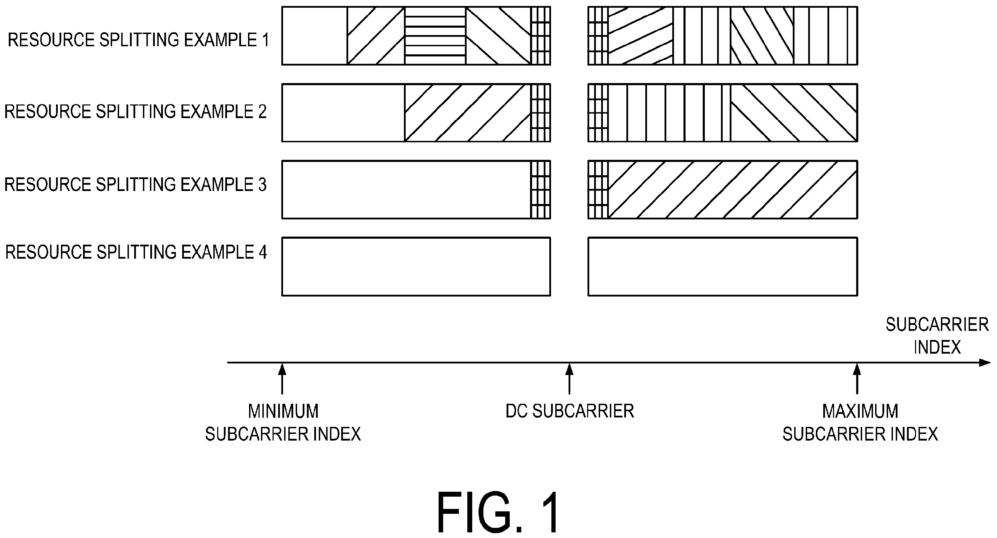

The radio medium can be split into a plurality of Resource units (RUs). FIG. 1 is an overview diagram illustrating an example of a split state of a radio medium. In the resource splitting example 1, for example, the radio communication apparatus can split a frequency resource (subcarrier) that is a radio medium into nine RUs. Similarly, in the resource splitting example 2, the radio communication apparatus can split a subcarrier that is a radio medium into five RUs. It is a matter of course that the resource splitting example illustrated in FIG. 1 is just an example, and for example, each of the plurality of RUs can include a different number of subcarriers. Moreover, the radio medium split into RUs can include not only a frequency resource but also a spatial resource. The radio communication apparatus (an access point apparatus, for example) can transmit frames to a plurality of terminal apparatuses (a plurality of station apparatuses, for example) at the same time by disposing the different frames directed to the terminal apparatuses in the RUs. The access point apparatus can describe information (Resource allocation information) indicating the split state of the radio medium as common control information in the PHY header of the frame transmitted by the access point apparatus. Moreover, the access point apparatus can describe information (resource unit assignment information) indicating an RU where a frame directed to each station apparatus is disposed as unique control information in the PHY header of the frame transmitted by the access point apparatus.

Also, a plurality of terminal apparatuses (a plurality of station apparatuses, for example) can transmit frames at the same time by transmitting the frames disposed in the RUs allocated to themselves, respectively. The plurality of station apparatuses can perform frame transmission after waiting for a predetermined period after receiving the frame (Trigger frame: TF) including trigger information transmitted from the access point apparatus. Each station apparatus can recognize the RU allocated to the station apparatus based on the information described in the TF. Also, each station apparatus can acquire the RU through a random access with reference to the TF.

The access point apparatus can allocate a plurality of RUs to one station apparatus at the same time. The plurality of RUs can include continuous subcarriers or can include noncontinuous subcarriers. The access point apparatus can transmit one frame using a plurality of RUs allocated to one station apparatus or can transmit a plurality of frames with the frames allocated to different RUs. At least one of the plurality of frames can be a frame including common control information for a plurality of terminal apparatuses that transmit Resource allocation information.

One station apparatus can be allocated a plurality of RUs by the access point apparatus. The station apparatus can transmit one frame using the plurality of allocated RUs. Also, the station apparatus can use the plurality of allocated RUs to perform transmission with a plurality of frames allocated to mutually different RUs. The plurality of frames can include frames of mutually different frame types.

The access point apparatus can also allocate a plurality of AIDs to one station apparatus. The access point apparatus can allocate an RU to each of the plurality of AIDs allocated to the one station apparatus. The access point apparatus can transmit mutual different frames using the RUs allocated to the plurality of AIDs allocated to the one station apparatus. The different frames can include frames of mutually different frame types.

The one station apparatus can also be allocated a plurality of AIDs by the access point apparatus. The one station apparatus can be allocated an RU to each of the plurality of AIDs allocated to the one station apparatus. The one station apparatus recognizes each of the RUs allocated to the corresponding one of the plurality of AIDs allocated to the one station apparatus as RUs allocated to the one station apparatus and can transmit one frame using the plurality of allocated RUs. Also, the one station apparatus can transmit a plurality of frames using the plurality of allocated RUs. At this time, the plurality of frames can be transmitted with information indicating AID associated with each of the allocated RUs described therein. The access point apparatus can transmit mutual different frames using the RUs allocated to the plurality of AIDs allocated to the one station apparatus. The different frames can include frames of different frame types.

Hereinafter, the base station apparatus and the terminal apparatuses will be collectively referred to as radio communication apparatuses or communication apparatuses. Also, information exchanged in a case that a certain radio communication apparatus performs communication with another radio communication apparatus will also be referred to as data. In other words, the radio communication apparatus includes the base station apparatus and the terminal apparatuses.

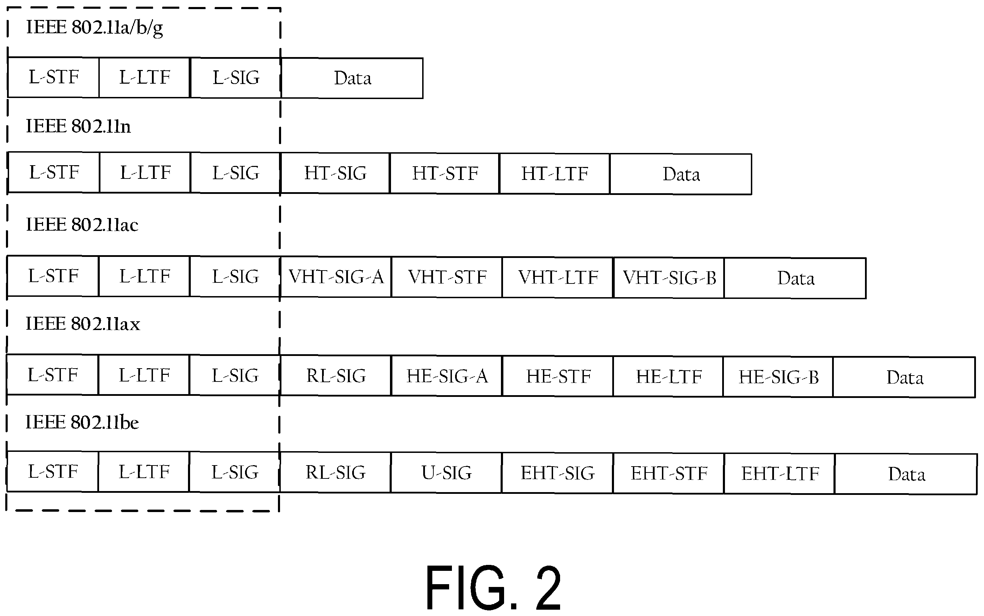

The radio communication apparatus includes any one of or both a function of transmitting a PPDU and a function of receiving a PPDU. FIG. 2 is a diagram illustrating an example of a configuration of the PPDU transmitted by the radio communication apparatus. The PPDU that is compliant with the IEEE 802.11a/b/g standard includes L-STF, L-LTF, L-SIG, and a Data frame (a MAC Frame, a MAC frame, a payload, a data part, data, information bits, and the like). The PPDU that is compliant with the IEEE 802.11n standard includes L-STF, L-LTF, L-SIG, HT-SIG, HT-STF, HT-LTF, and a Data frame. The PPDU that is compliant with the IEEE 802.11ac standard includes some or all of L-STF, L-LTF, L-SIG, VHT-SIG-A, VHT-STF, VHT-LTF, VHT-SIG-B, and a MAC frame. The PPDU in the IEEE 802.11ax standard includes some or all of L-STF, L-LTF, L-SIG, RL-SIG in which L-SIG is temporally repeated, HE-SIG-A, HE-STF, HE-LTF, HE-SIG-B, and a Data frame. The PPDU studied in the IEEE 802.11be standard includes some or all of L-STF, L-LTF, L-SIG, RL-SIG, U-SIG, EHT-SIG, EHT-STF, EHT-LTF, and a Data frame.

L-STF, L-LTF, and L-SIG surrounded by the dotted line in FIG. 2 are configurations commonly used in the IEEE 802.11 standard (hereinafter, L-STF, L-LTF, and L-SIG will also be collectively referred to as an L-header). For example, a radio communication apparatus that is compliant with the IEEE 802.11a/b/g standard can appropriately receive an L-header inside a PPDU that is compliant with the IEEE 802.11n/ac standard. The radio communication apparatus that is compliant with the IEEE 802 11a/b/g standard can receive the PPDU that is compliant with the IEEE 802 11n/ac standard while regarding it as a PPDU that is compliant with the IEEE 802.11a/b/g standard.

However, because the radio communication apparatus that is compliant with the IEEE 802.11a/b/g standard cannot demodulate the PPDU that is compliant with the IEEE 802.11n/ac standard following the L-header, it is not possible to demodulate information related to a Transmitter Address (TA), a Receiver Address (RA), and a Duration/ID field used for configuring the NAV.

As a method for the radio communication apparatus that is compliant with the IEEE 802.11a/b/g standard to appropriately configure the NAV (or perform a receiving operation for a predetermined period), IEEE 802.11 defines a method of inserting Duration information to the L-SIG. Information related to a transmission speed in the L-SIG (a RATE field, an L-RATE field, an L-RATE, an L_DATARATE, and an L_DATARATE field), information related to a transmission period (a LENGTH field, an L-LENGTH field, and an L-LENGTH) are used by the radio communication apparatus that is compliant with the IEEE 802.11a/b/g standard to appropriately configure NAV.

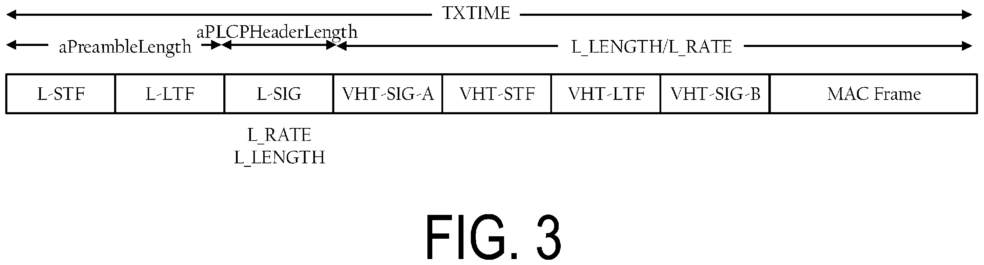

FIG. 3 is a diagram illustrating an example of a method of Duration information inserted into L-SIG. Although a PPDU configuration that is compliant with the IEEE 802.11ac standard is illustrated as an example in FIG. 3, the PPDU configuration is not limited thereto. A PPDU configuration that is compliant with the IEEE 802.11n standard and a PPDU configuration that is compliant with the IEEE 802.11ax standard may be employed. TXTIME includes information related to the length of the PPDU, aPreambleLength includes information related to the length of a preamble (L-STF + L-LTF), and aPLCPHeaderLength includes information related to the length of a PLCP header (L-SIG). L_LENGTH is calculated based on Signal Extension that is a virtual period configured for compatibility with the IEEE 802.11 standard, Nₒₚₛ related to L_RATE, aSymbolLength that is information related to one symbol (a symbol, an OFDM symbol, or the like), aPLCPServiceLength indicating the number of bits included in PLCP Service field, and aPLCPConvolutionalTailLength indicating the number of tail bits of a convolution code. The radio communication apparatus can calculate L_LENGTH and insert L_LENGTH into L-SIG. Also, the radio communication apparatus can calculate L-SIG Duration. L-SIG Duration indicates information related to a PPDU including L_LENGTH and information related to a period that is the sum of periods of Ack and SIFS expected to be transmitted by the destination radio communication apparatus in response to the PPDU.

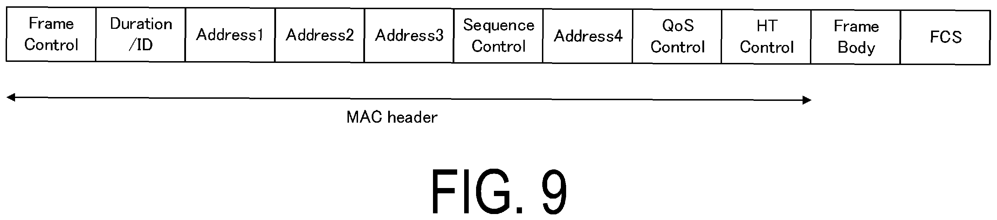

FIG. 9 illustrates an example of a MAC Frame format. The MAC Frame described herein indicates a Data frame in FIG. 2 (a MAC Frame, a MAC frame, a payload, a data unit, data, an information bit, and the like) and a MAC Frame in FIG. 3. The MAC Frame includes a Frame Control, a Duration/ID, an Address 1, an Address 2, an Address 3, a Sequence Control, an Address 4, a QoS Control, an HT Control, a Frame Body, and an FCS.

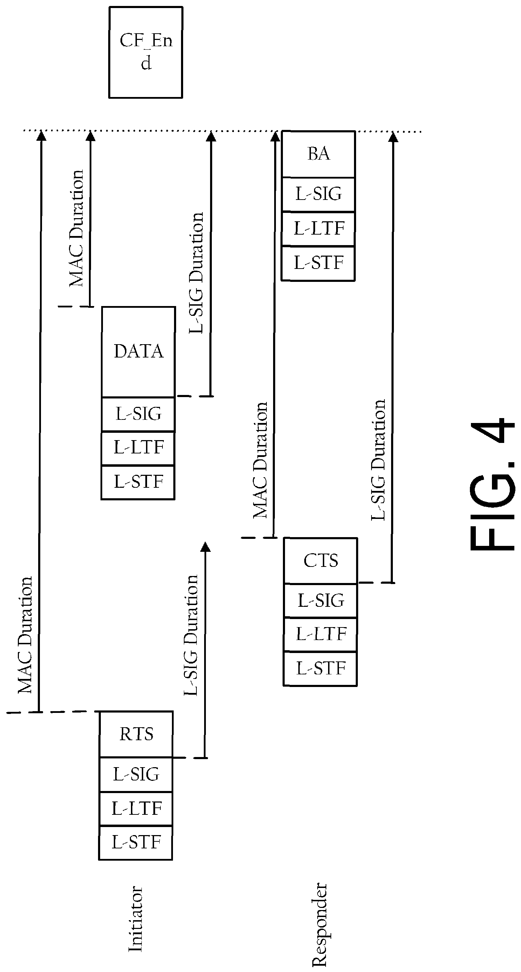

FIG. 4 is a diagram illustrating an example of L-SIG Duration in L-SIG TXOP Protection. DATA (a frame, a payload, data, and the like) include a part of or both the MAC frame and the PLCP header. Also, BA includes Block Ack or Ack. The PPDU includes L-STF, L-LTF, and L-SIG and can further include any one or more of DATA, BA, RTS, and CTS. Although L-SIG TXOP Protection using RTS/CTS is illustrated in the example illustrated in FIG. 4, CTS-to-Self may be used. Here, MAC Duration is a period indicated by a value of Duration/ID field. Also, Initiator can transmit a CF_End frame for providing a notification regarding an end of the L-SIG TXOP Protection period.

Next, a method of identifying a BSS from a frame received by a radio communication apparatus will be described. In order for the radio communication apparatus to identify the BSS from the received frame, the radio communication apparatus that transmits a PPDU preferably inserts information (BSS color, BSS identification information, a value unique to the BSS) for identifying the BSS into the PPDU, and it is possible to describe information indicating BSS color in HE-SIG-A.

The radio communication apparatus can transmit L-SIG a plurality of times (L-SIG Repetition). For example, demodulation accuracy of L-SIG is improved by the radio communication apparatus on the reception end receiving L-SIG transmitted a plurality of times by using Maximum Ratio Combining (MRC). Moreover, in a case that reception of L-SIG has properly been completed using MRC, the radio communication apparatus can interpret the PPDU including the L-SIG as a PPDU that is compliant with the IEEE 802.11ax standard.

Even during the operation of receiving the PPDU, the radio communication apparatus can perform an operation of receiving a part of a PPDU other than the PPDU (such as a preamble, L-STF, L-LTF, and a PLCP header defined by IEEE 802.11, for example) (also referred to as a double-reception operation). In a case that a part of a PPDU other than the PPDU is detected during the operation of receiving the PPDU, the radio communication apparatus can update a part or an entirety of information related to a destination address, a source address, the PPDU, or a DATA period.

Ack and BA can also be referred to as a response (response frame). Also, a probe response, an authentication response, and an association response can also be referred to as a response.

### 1. First Embodiment

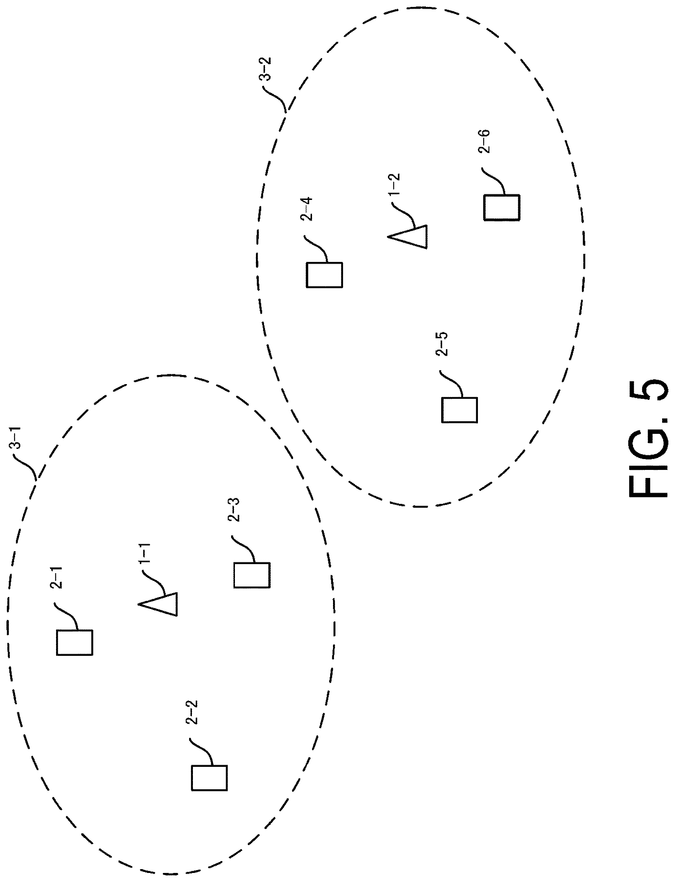

FIG. 5 is a diagram illustrating an example of a radio communication system according to the present embodiment. A radio communication system 3-1 includes a radio communication apparatus 1-1 and radio communication apparatuses 2-1 to 2-3. Note that the radio communication apparatus 1-1 will also be referred to as a base station apparatus 1-1, and the radio communication apparatuses 2-1 to 2-3 will also be referred to as terminal apparatuses 2-1 to 2-3. In addition, the radio communication apparatuses 2-1 to 2-3 and the terminal apparatuses 2-1 to 2-3 will also be referred to as a radio communication apparatus 2A and a terminal apparatus 2A, respectively, as apparatuses associated to the radio communication apparatus 1-1. The radio communication apparatus 1-1 and the radio communication apparatus 2A are wirelessly associated and are in a state in which they can transmit and/or receive PPDUs to and from each other. Also, the radio communication system according to the present embodiment may include a radio communication system 3-2 in addition to the radio communication system 3-1. The radio communication system 3-2 includes a radio communication apparatus 1-2 and radio communication apparatuses 2-4 to 2-6. Note that the radio communication apparatus 1-2 will also be referred to as a base station apparatus 1-2 and the radio communication apparatuses 2-4 to 2-6 will also be referred to as terminal apparatuses 2-4 to 2-6. Also, the radio communication apparatuses 2-4 to 2-6 and the terminal apparatuses 2-4 to 2-6 will also be referred to as a radio communication apparatus 2B and a terminal apparatus 2B, respectively, as apparatuses associated to the radio communication apparatus 1-2. Although the radio communication system 3-1 and the radio communication system 3-2 form different BSSs, this does not necessarily mean that Extended Service Sets (ESSs) are different. The ESSs indicate service sets forming a Local Area Network (LAN). In other words, radio communication apparatuses belonging to the same ESS can be regarded as belonging to the same network from a higher layer. Also, the BSSs are connected via a Distribution System (DS) and form an ESS. Note that each of the radio communication systems 3-1 and 3-2 can further include a plurality of radio communication apparatuses.

In FIG. 5, it is assumed that signals transmitted by the radio communication apparatus 2A reach the radio communication apparatus 1-1 and the radio communication apparatus 2B while the signals do not reach the radio communication apparatus 1-2 in the following description. In other words, in a case that the radio communication apparatus 2A transmits a signal using a certain channel, the radio communication apparatus 1-1 and the radio communication apparatus 2B determine that the channel is in the busy state while the radio communication apparatus 1-2 determines that the channel is in an idle state. Also, it is assumed that signals transmitted by the radio communication apparatus 2B reach the radio communication apparatus 1-2 and the radio communication apparatus 2A while the signals do not reach the radio communication apparatus 1-1. In other words, in a case that the radio communication apparatus 2B transmits a signal using a certain channel, the radio communication apparatus 1-2 and the radio communication apparatus 2A determine that the channel is in the busy state while the radio communication apparatus 1-1 determines that the channel is in the idle state.

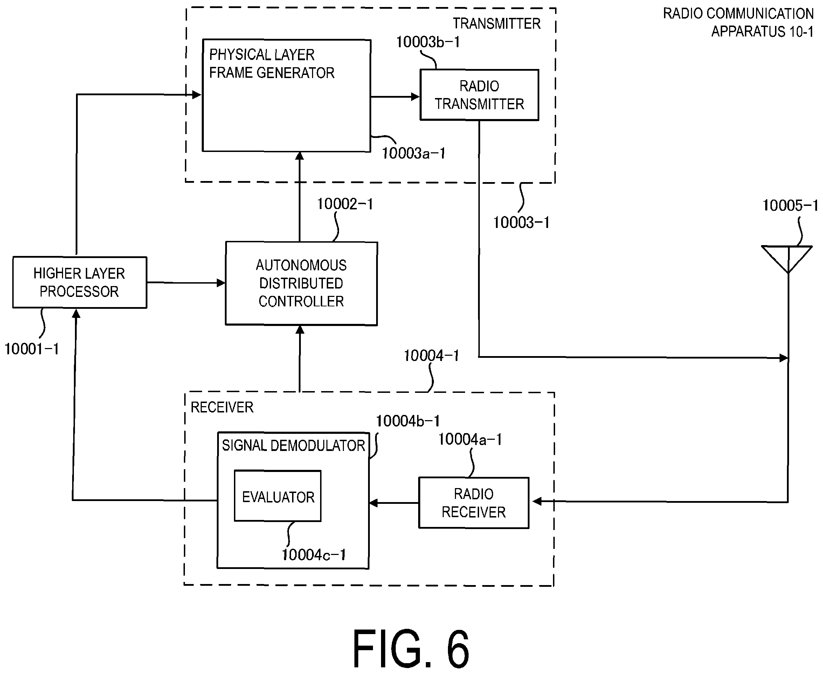

FIG. 6 is a diagram illustrating an example of an apparatus configuration of radio communication apparatuses 1-1, 1-2, 2A, and 2B (hereinafter, collectively referred to as a radio communication apparatus 10-1 or a station apparatus 10-1 or also simply referred to as a station apparatus). The radio communication apparatus 10-1 includes a higher layer processor (higher layer processing step) 10001-1, an autonomous distributed controller (autonomous distributed control step) 10002-1, a transmitter (transmission step) 10003-1, a receiver (reception step) 10004-1, and an antenna 10005-1.

The higher layer processor 10001-1 performs information processing for layers higher than the physical layer, for example, the MAC layer and the LLC layer in regard to information (information related to a transmission frame, a Management Information Base (MIB), and the like) handled in the radio communication apparatus and a frame received from another radio communication apparatus.

The higher layer processor 10001-1 can notify the autonomous distributed controller 10002-1 of information related to a frame and a traffic transmitted to a radio medium. The information related to a frame and a traffic may be control information included in a management frame such as a beacon, for example, or may be measurement information reported by another radio communication apparatus to the radio communication apparatus. Moreover, the information may be control information included in a management frame or a control frame with the destination not limited (the information may be directed to the apparatus, may be directed to another apparatus, may be broadcasting, or may be multicasting).

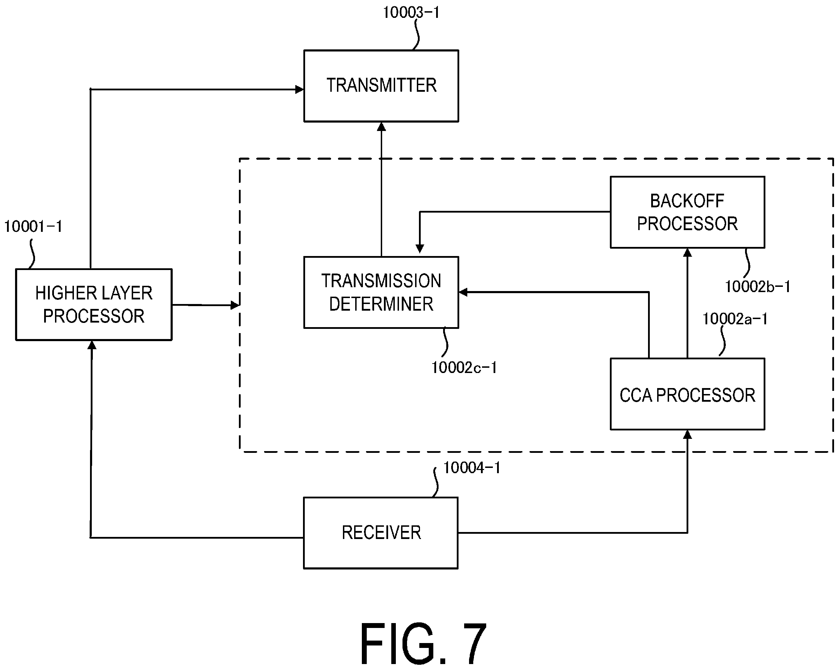

FIG. 7 is a diagram illustrating an example of an apparatus configuration of the autonomous distributed controller 10002-1. The autonomous distributed controller 10002-1 will also be referred to as a controller 10002-1 and includes a CCA processor (CCA step) 10002a-1, a backoff processor (backoff step) 10002b-1, and a transmission determiner (transmission determination step) 10002c-1.

The CCA processor 10002a-1 can perform determination of a state of a radio resource (including determination between a busy state and an idle state) using any one of or both information related to received signal power received via the radio resource and information related to the received signal (including information after decoding) provided as a notification from the receiver 10004-1. The CCA processor 10002a-1 can notify the backoff processor 10002b-1 and the transmission determiner 10002c-1 of the state determination information of the radio resource.

The backoff processor 10002b-1 can perform backoff using the state determination information of the radio resource. The backoff processor 10002b-1 generates CW and includes a counting-down function. For example, it is possible to perform counting-down of CW in a case that the state determination information of the radio resource indicates an idle state, for example, and it is possible to stop the counting-down of CW in a case that the state determination information of the radio resource indicates a busy state. The backoff processor 10002b-1 can notify the transmission determiner 10002c-1 of the value of CW.

The transmission determiner 10002c-1 performs transmission determination using any one of or both the state determination information of the radio resource and the value of CW. For example, it is possible to notify the transmitter 10003-1 of transmission determination information in a case that the state determination information of the radio resource indicates idle and the value of CW is zero. Also, it is possible to notify the transmitter 10003-1 of the transmission determination information in a case that the state determination information of the radio resource indicates idle.

The transmitter 10003-1 includes a physical layer frame generator (physical layer frame generation step) 10003a-1 and a radio transmitter (radio transmission step) 10003b-1. Note that the physical layer frame generator (physical layer frame generation step) may be referred to as a frame generator (frame generation step). The physical layer frame generator 10003a-1 includes a function of generating a physical layer frame (hereinafter, also referred to as a frame or a PPDU) based on the transmission determination information provided as a notification from the transmission determiner 10002c-1. The physical layer frame generator 10003a-1 includes a coder that performs error correction coding processing on data received from the higher layer and generates a coding block. Also, the physical layer frame generator 10003a-1 also includes a function of performing modulation, precoding filter multiplication, and the like. The physical layer frame generator 10003a-1 sends the generated physical layer frame to the radio transmitter 10003b-1.

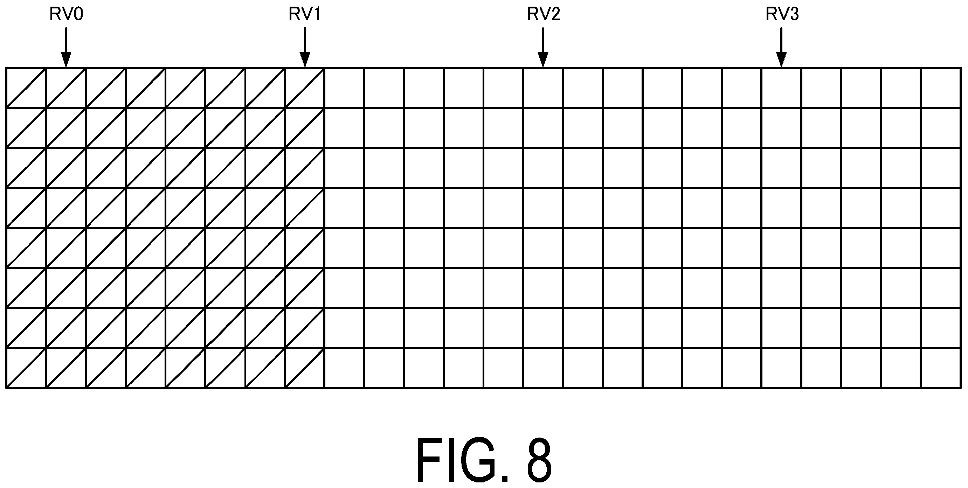

FIG. 8 is a diagram illustrating an example of error correction coding according to the present embodiment. As illustrated in FIG. 8, an information bit (systematic bit) sequence is arranged in the hatched region and a redundancy bit sequence (parity bit sequence) is arranged in the white region. For each of the information bit and the redundancy bit, a bit interleaver is appropriately applied. The physical layer frame generator 10003a-1 can read a necessary number of bits as a start position determined for the arranged bit sequence in accordance with a value of Redundancy Version (RV). It is possible to achieve a flexible change in coding rate, that is puncturing, through adjustment of the number of bits. Note that although a total of four RVs are illustrated in FIG. 8, the number of options for RV is not limited to a specific value in the error correction coding according to the present embodiment. The position of the RV has to be shared among the station apparatuses. It is needless to say that the method of the error correction coding according to the present embodiment is not limited to the example in FIG. 8, and it is only necessary to employ a method by which the coding rate can be changed and decoding processing on the reception end can be achieved.

For example, the RV may indicate a number of a parity block. The parity block is obtained by splitting a parity bit sequence into one or more blocks. In a case that the number of parity blocks is four, and the parity blocks are assumed to be based on RV1 to RV4, then a different parity bit is transmitted depending on the value of RV.

Also, the frame generated by the physical layer frame generator 10003a-1 includes a trigger frame for providing an indication for transmitting the frame to the radio communication apparatus that is a destination terminal. The trigger frame includes information indicating the RU used in a case that the radio communication apparatus that has received the indication for transmitting the frame transmits the frame.

The radio transmitter 10003b-1 converts the physical layer frame generated by the physical layer frame generator 10003a-1 into a signal in a Radio Frequency (RF) band to generate a radio frequency signal. Processing performed by the radio transmitter 10003b-1 includes digital-to-analog conversion, filtering, frequency conversion from a baseband to an RF band, and the like.

The receiver 10004-1 includes a radio receiver (radio receiving step) 10004a-1 and a signal demodulator (signal demodulation step) 10004b-1. The receiver 10004-1 generates information related to received signal power from the signal in the RF band received by the antenna 10005-1. The receiver 10004-1 can notify the CCA processor 10002a-1 of the information related to the received signal power and the information related to the received signal.

The radio receiver 10004a-1 includes a function of converting the signal in the RF band received by the antenna 10005-1 into a baseband signal and generating a physical layer signal (for example, a physical layer frame). Processing performed by the radio receiver 10004a-1 includes frequency conversion processing from the RF band to the baseband, filtering, and analog-to-digital conversion.

The signal demodulator 10004b-1 has a function of demodulating the physical layer signal generated by the radio receiver 10004a-1. Processing performed by the signal demodulator 10004b-1 includes channel equalization, demapping, error correction decoding, and the like. The signal demodulator 10004b-1 can extract, from the physical layer signal, information included in the PHY header, information included in the MAC header, and information included in the transmission frame, for example. The signal demodulator 10004b-1 can notify the higher layer processor 10001-1 of the extracted information. Note that the signal demodulator 10004b-1 can extract any one or all of information included in the PHY header, information included in the MAC header, and information included in the transmission frame. An evaluator (evaluation step) 10004c-1 performs predetermined operation on the thus extracted information included in the PHY header, the MAC header and the like and notifies the higher layer processor of detail in accordance with the evaluation.

The antenna 10005-1 includes a function of transmitting the radio frequency signal generated by the radio transmitter 10003b-1 to a radio space. Also, the antenna 10005-1 includes a function of receiving the radio frequency signal and passing the radio frequency signal to the radio receiver 10004a-1.

The radio communication apparatus 10-1 can cause radio communication apparatuses in the surroundings of the radio communication apparatus 10-1 to configure NAV corresponding to a period during which the radio communication apparatus uses a radio medium by describing information indicating the period in the PHY header or the MAC header of the frame to be transmitted. For example, the radio communication apparatus 10-1 can describe the information indicating the period in a Duration/ID field or a Length field in the frame to be transmitted. The NAV period configured to radio communication apparatuses in the surroundings of the radio communication apparatus will be referred to as a TXOP period (or simply TXOP) acquired by the radio communication apparatus 10-1. Also, the radio communication apparatus 10-1 that has acquired the TXOP will be referred to as a TXOP holder. The frame type of frame to be transmitted by the radio communication apparatus 10-1 to acquire TXOP is not limited to any frame type, and the frame may be a control frame (for example, an RTS frame or a CTS-to-self frame) or may be a data frame.

The radio communication apparatus 10-1 that is a TXOP holder can transmit the frame to radio communication apparatuses other than the radio communication apparatus during the TXOP. In a case that the radio communication apparatus 1-1 is a TXOP holder, the radio communication apparatus 1-1 can transmit a frame to the radio communication apparatus 2A during the TXOP period. Also, the radio communication apparatus 1-1 can provide an indication for transmitting a frame directed to the radio communication apparatus 1-1 to the radio communication apparatus 2A during the TXOP period. The radio communication apparatus 1-1 can transmit, to the radio communication apparatus 2A, a trigger frame including information for providing an indication for transmitting a frame directed to the radio communication apparatus 1-1 during the TXOP period.

The radio communication apparatus 1-1 may ensure TXOP for the entire communication band (an Operation bandwidth, for example) that may be used for frame transmission or may ensure a specific communication Band such as a communication band actually used to transmit the frame (a Transmission bandwidth, for example).

The radio communication apparatus that provides an indication for transmitting a frame in the TXOP period acquired by the radio communication apparatus 1-1 is not necessarily limited to radio communication apparatuses associated to the radio communication apparatus. For example, the radio communication apparatus can provide an indication for transmitting frames to radio communication apparatuses that are not associated to the radio communication apparatus in order to cause the radio communication apparatuses in the surroundings of the radio communication apparatus to transmit management frames such as a Reassociation frame or control frames such as an RTS/CTS frame.

Furthermore, TXOP in EDCA that is a data transmission method different from DCF will also be described. The IEEE 802.11e standard relates to EDCA and defines TXOP in terms of guaranty of Quality of Service (QoS) for various services such as video transmission and VoIP. The services are roughly classified into four access categories, namely VOice (VO), VIdeo (VI), Best Effort (BE), and Back ground (BK). In general, the services include VO, VI, BE, and BK with higher priority in this order. In each access category, there are parameters including a minimum value CWmin of CW, a maximum value CWmax of CW, Arbitration IFS (AIFS) as a type of IFS, and TXOP limit that is an upper limit value of a transmission opportunity, and values are set to have differences in priority. For example, it is possible to perform data transmission prioritized over the other access categories by setting a relatively small value for CWmin, CWmax, and AIFS of VO with the highest priority for the purpose of voice transmission as compared with the other access categories. For example, in a case of VI with a relatively large amount of transmission data to transmit a video, it is possible to extend a transmission opportunity as compared with the other access categories by configuring TXOP limit to be large. In this manner, four parameter values of the access categories are adjusted for the purpose of guaranteeing QoS in accordance with various services.

Although a case that the radio communication apparatus 2A (terminal apparatus 2A) including the radio communication apparatus 2-1 (terminal apparatus 2-1) acquires a priority right from the radio communication apparatus 1-1 (base station apparatus 1-1) and transmits a frame in accordance with the acquired priority right will be mainly described in the following embodiment, the present invention is not limited thereto and can also be applied to a case that the radio communication apparatus 1-1 (base station apparatus 1-1) acquires a priority right from the radio communication apparatus 2A (terminal apparatus 2A) and transmits a frame in accordance with the acquired priority right. Also, although the present embodiment will be described mainly on the assumption that the priority right is a priority right for low-delay transmission (low-delay transmission priority right), the present embodiment can also be applied to other priority rights. Although there is a priority right for ensuring a radio channel and a priority right for ensuring a radio resource (resource unit), for example, the priority right is not limited thereto. Note that the apparatus configurations of the radio communication apparatus 1-1 and the radio communication apparatus 2A are similar to the apparatus configuration example described using FIG. 6 and FIG. 7 unless particularly indicated otherwise. Although the number of radio communication apparatuses that can acquire the priority right may not be limited in the radio communication system, the number may be limited with an upper limit number defined by a radio communication system operation policy.

The radio communication system according to the present embodiment is based on DCF in which the controller of each radio communication apparatus performs carrier sense, autonomously acquires a transmission right, and controls frame transmission. In other words, each radio communication apparatus basically acquires a transmission right in a case that it performs carrier sense after elapse of a random time backoff time in addition to DIFS and determines the state as an idle state and can thus transmit the frame. On the other hand, according to the present embodiment, the radio communication apparatus acquires low-delay transmission priority right on the assumption that a specific condition (low-delay transmission priority right utilization condition) is to be complied with. As an example of a method for achieving low-delay transmission, there is a method in which the controller acquires the transmission right (transmission right acquisition with PIFS) in a case that the controller performs carrier sense after elapse of PIFS time that is shorter than DIFS and determines the state as an idle state and transmits the frame. It is possible to acquire a radio medium (acquire TXOP) with priority by shortening the waiting time (backoff time) and to transmit the frame with low delay. Although frame transmission through transmission right acquisition with PIFS will be mainly described as an example of achieving low-delay transmission, the interval is not limited to PIFS and may be other IFS. Also, the method for achieving low-delay transmission is also not limited to a change in IFS, and any method may be used as long as it is possible to transmit a frame with low delay with priority.

For a device for a specific field where the frame size to be transmitted may be small or transmission frequency may be low, such as an IoT device or a control signal device such as a robot, frame transmission based on transmission right acquisition with the PIFS in which the low-delay transmission priority right is exercised may be performed for all data frames to be transmitted by the radio communication apparatus.

On the other hand, because a typical radio communication apparatus transmits traffics (data, frames) for various applications (or services) with a variety of required specifications defined by a delay, a jitter, and the like, it is not necessary to exercise the low-delay transmission right for all the frame transmissions. In other words, the radio communication apparatus that has acquired the low-delay transmission priority right does not necessarily transmit all the frames based on the acquisition of the transmission right with PIFS through exercising of the low-delay transmission priority right. For example, traffic (data, frames) with a higher required specification in relation to a delay and jitter than traffic and frames classified into the aforementioned access category defined by the IEEE 802.11e standard are defined as Very High Priority traffic (VHPT), and traffic other than VHPT is defined as non-very high priority traffic (non-VHPT). The controller performs allocation such that only the very high priority traffic is transmitted through exercising of the low-delay transmission priority right in the present embodiment.

Whether the traffic is a very high priority traffic or non-very high priority traffic in a low layer may be determined based on a required specification for the communication traffic from an application (or a service) located in the higher layer using inter-layer cooperation with the higher layer. The required specification related to the communication traffic may be defined by the amount of allowable delay, the amount of allowable jitter, a data size, a data occurrence frequency, and the like. For traffic with a small data size and with a low data occurrence frequency, in a case that the amount of allowable delay and the amount of allowable jitter are small, for example, it may be categorized into a very high priority traffic in accordance with these required specifications, and a low-delay transmission priority right, which will be described in the present embodiment, may be applied thereto. Moreover, congestion information of the physical layer and the like may be delivered to the higher layer, and the higher layer or the application may be allowed to determine a required specification for the communication traffic.

The radio communication apparatus 2A can acquire the low-delay transmission priority right on the assumption that it complies with the low-delay transmission priority right utilization condition. As the low-delay transmission priority right utilization condition, the number of frame transmissions per certain period, a radio medium occupancy time per certain period, a radio medium occupancy rate, or the like may be configured as a threshold value for a frame to be transmitted by the radio communication apparatus 2A through exercising of the low-delay transmission priority right, for example. For example, a rule (regulation) that a frame can be transmitted by the radio communication apparatus through exercising of the low-delay transmission priority right without exceeding the threshold range is determined with the configured threshold value defined as an upper limit threshold value. In this manner, it is possible to reduce the number of transmission frames, the medium occupancy time, the medium occupancy rate, and the like required for the acquisition of the transmission right with PIFS through exercising of the low-delay transmission priority right and to achieve a balance such that the ordinary frame transmission with the DIFS in the radio communication system based on DCF is not significantly disturbed.

The radio communication apparatus 2A may embed, in a corresponding frame, information with which it is possible to determine presence or absence of the exercising (low-delay transmission priority right identification information) in a case that frame transmission is performed through exercising of the acquired low-delay transmission priority right. The low-delay transmission priority right identification information may be disposed in the PHY header. For example, the low-delay transmission priority right identification information may be allocated to a specific field in U-SIG included in the PHY header. Here, the aforementioned specific field will be referred to as a low-delay transmission priority right identification field. In a case that the number of bits in the low-delay transmission priority right identification field is 1, distinction is performed such that the value "0" in the field indicates transmission based on DIFS and the value "1" in the field indicates frame transmission through acquisition of the transmission right with PIFS through exercising of the low-delay transmission priority right. Although the case that the low-delay transmission priority right identification field allocates 1 bit to U-SIG in the PHY header has been described above, another field in the PHY header may be used, and the number of allocated bits is also freely determined. Also, it is not always necessary to use the PHY header, and a specific bit in the field included in the higher layer, such as a MAC header, may be used to enable distinction of presence or absence of exercising of the low-delay transmission priority right. For example, the low-delay transmission priority right identification field may be allocated to a part of the QoS control field of the MAC header or may be allocated to somewhere except for the QoS control field.

The radio communication apparatus 1-1 can determine whether the radio frame received from the radio communication apparatus 2A has been transmitted based on DIFS or whether the frame has been transmitted through acquisition of the transmission right with PIFS through exercising of the low-delay transmission priority right, by checking the low-delay transmission priority right identification field in the received radio frame. The radio communication apparatus 1-1 can count the number of frames on which the low-delay transmission priority right has been exercised among the received frames and can further calculate the radio medium occupancy time of the frames using Duration information included in L-SIG in the PHY header and Duration information included in the MAC header, using the evaluator. Therefore, the radio communication apparatus 1-1 can also calculate the radio medium occupancy rate of the frame transmitted by each radio communication apparatus 2A through exercising of the low-delay transmission priority right. The evaluator can check whether the low-delay transmission priority right utilization condition is complied with, using the thus calculated value.

The radio communication apparatus 1-1 can distinguish the radio communication apparatus from a transmission source MAC address included in the MAC header of the received frame and can calculate the number of frames transmitted through exercising of the low-delay transmission priority right, the radio medium occupancy time, and the radio medium occupancy time rate for each radio communication apparatus 2A. In order to distinguish each radio communication apparatus 2A, AID may be used. In a case that information with which each radio communication apparatus 2A can be distinguished is transmitted in the PHY header of the frame transmitted by the radio communication apparatus 2A, the radio communication apparatus 1-1 can calculate the number of frames transmitted through exercising of the low-delay transmission priority right, the radio medium occupancy time, and the radio medium occupancy time rate for each radio communication apparatus 2A using the information included only in the PHY header. The identification information occupying the PYH header may be reduced using information obtained by shortening AID with a hash function or the like.

The radio communication apparatus 2A that is determined not to comply with the low-delay transmission priority right utilization condition through the aforementioned checking performed by the radio communication apparatus 1-1 may be charged a penalty by the radio communication apparatus 1-1. In one example, the radio communication apparatus 2A may receive control information indicating the low-delay transmission priority right invalidation from the radio communication apparatus 1-1 and the low-delay transmission priority right may be invalidated. The invalidation may be temporary, and the low-delay transmission priority right may be validated again after elapse of a specific period of time. In one example, the radio communication apparatus 2A may receive control information indicating a change in low-delay transmission priority right from the radio communication apparatus 1-1, and the priority may be lowered. As an example of how to lower the priority, there is an application of a change from TXOP acquisition with PIFS to TXOP acquisition with DIFS with no backoff time. In this case, the priority is lower than that of PIFS but is higher than that of ordinary DIFS + random backoff time, and it is possible to acquire a radio medium (acquire TXOP) and to transmit a frame. Such an application of DIFS with no backoff time may be temporary, and the priority right of PIFS transmission may be validated again after elapse of a specific period of time. In this manner, the penalty may be temporarily applied, and the application may be canceled after elapse of a specific period of time.

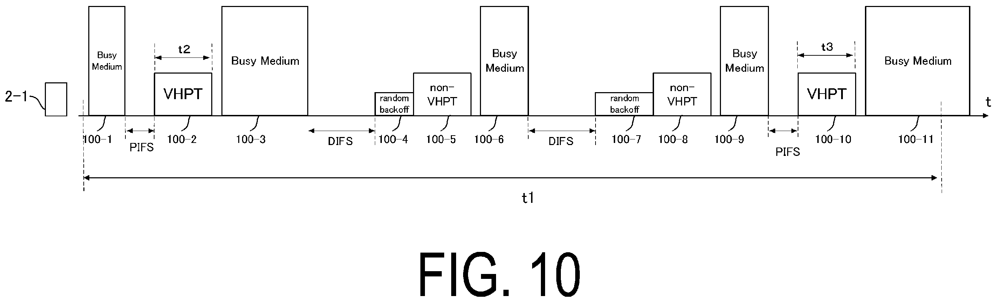

An example in which the radio communication apparatus 2-1 performs frame transmission of very high priority traffic and non-very high priority traffic (non-VHPT) is shown in FIG. 10. It is assumed that VHPT remains in a transmission queue of the radio communication apparatus 2-1. Once the Busy state (100-1) of a radio medium ends, then the processing proceeds to a procedure for transmitting VHPT that is present in the transmission queue through exercising of a low-delay transmission right. In other words, in a case that the radio medium is in the idle state after PIFS, then the transmission right is acquired, and a frame 100-2 is transmitted. It is assumed that non-VHPT remains next in the transmission queue. Once the Busy state (100-3) of the radio medium ends, then an ordinary transmission based on DIFS is performed. In other words, in a case that the radio medium is in the idle state after the random backoff (100-4) in addition to DIFS, the transmission right is acquired, and a frame 100-5 is transmitted. In a case that it is possible to prepare a plurality of transmission queues, a transmission queue for very high priority traffic may be prepared, and in a case that data is present in the transmission queue for the very high priority traffic, the data may be transmitted with higher priority than the other queues.

Although it is assumed that the number of frame transmissions allowed through exercising of the low-delay transmission right during a time t1 is two for the radio communication apparatus 2-1 in FIG. 10, this is an example of the aforementioned low-delay transmission priority right utilization condition. In FIG. 10, the radio frames transmitted through exercising of the low-delay transmission right are a frame 100-2 and a frame 100-10. In a case that the low-delay transmission priority right utilization condition is not complied with, for example, in a case that a VHPT frame is transmitted three times during the time t1, the low-delay transmission priority right acquired by the radio communication apparatus 2-1 is invalidated. Although the low-delay transmission priority right invalidation has been described by exemplifying the number of frame transmissions, the same applies to a case of a radio medium occupancy time. The radio medium occupancy times of the VHPT frames 100-2 and 100-10 are t2 and t3, respectively. In a case that the radio medium occupancy time is configured to be t4 in the low-delay transmission priority right utilization condition, it is necessary that a sum of t2 and t3 be below t4. In a case that the sum exceeds t4, the radio communication apparatus 2-1 is determined not to comply with the low-delay transmission priority right utilization condition, and the low-delay transmission priority right acquired by the radio communication apparatus 2-1 is invalidated.

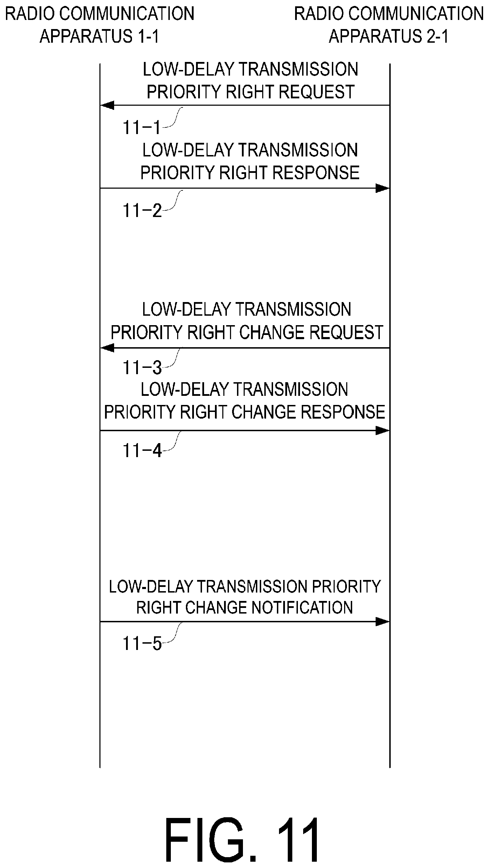

FIG. 11 illustrates a sequence diagram related to a low-delay transmission priority right according to the present embodiment. The radio communication apparatus 2-1 can transmit a low-delay transmission priority right request (11-1) to the radio communication apparatus 1-1. The low-delay transmission priority right request includes information related to a low-delay transmission priority right requested by the radio communication apparatus 2-1, information related to the low-delay transmission priority right utilization condition (low-delay transmission priority right utilization condition information), and the like. The low-delay transmission priority right utilization condition information may include, for example, a value related to calculation of the radio medium occupancy rate such as the number of transmissions of a frame transmitted through exercising of the low-delay transmission priority right per certain period of time and a radio medium occupancy time per certain period of time. In addition, information related to a field (such as IoT and robot control, for example) to which an application (or a service) that requests the low-delay transmission priority right belongs may be included. Moreover, the low-delay transmission priority right utilization condition information may be configured by a protocol used by the higher layer, for example, class information used by DiffServe used by the IP layer.

The radio communication apparatus 1-1 compares a required value of the low-delay transmission priority right utilization condition of the radio communication apparatus 1-1 with a required value of the low-delay transmission priority right utilization condition included in the low-delay transmission priority right request from the radio communication apparatus 2-1, determines whether to accept the request from the radio communication apparatus 2-1, and transmits a low-delay transmission priority right response (11-2) to the radio communication apparatus 2-1. The low-delay transmission priority right response may include low-delay transmission priority right acquisition information indicating whether to allow the radio communication apparatus 2-1 to perform frame transmission through exercising of the low-delay transmission priority right and may further include low-delay transmission priority right utilization condition information to be allowed for the radio communication apparatus 2-1. The low-delay transmission priority right utilization condition information may be calculated and determined based on the low-delay transmission priority right utilization condition requested by the radio communication apparatus 2-1 and the low-delay transmission priority right utilization condition held by the radio communication apparatus 1-1. As a calculation method, the condition requested by the radio communication apparatus 2-1 may be accepted as it is, or the radio communication apparatus 2-1 may be forced to comply with the condition held by the radio communication apparatus 1-1. Specifically, the determination may be made in accordance with a result of current medium occupancy measurement performed by the radio communication apparatus 1-1, and for example, the low-delay transmission priority right utilization condition may be determined such that the request from the radio communication apparatus 2-1 is accepted in a case that the result is below a threshold value and the radio communication apparatus 2-1 is forced to comply with the condition held by the radio communication apparatus 1-1 in a case that the result exceeds the threshold value.

As described in the previous paragraph, negotiation of the low-delay transmission priority right utilization condition through signalling of the low-delay transmission priority right request (11-1) and the low-delay transmission priority right response (11-2) is advantageous in that it is possible to flexibly determine the low-delay transmission priority right utilization condition in accordance with the radio environment. On the other hand, because there is also overhead due to the negotiation, the low-delay transmission priority right utilization condition broadcast by the radio communication apparatus 1-1 or the low-delay transmission priority right utilization condition individually determined by the radio communication apparatus 2-1 may be used as it is, with the negotiation omitted. It is possible to omit the signalling for the negotiation between the radio communication apparatus 1-1 and the radio communication apparatus 2-1. Note that whether to perform the negotiation may be determined in accordance with the radio communication system operation policy.

The radio communication apparatus 2-1 checks low-delay transmission priority right acquisition information included in a low-delay transmission priority right response (11-2), and the frame transmission through exercising of the low-delay transmission priority right is available in a case that "allowed" notification is provided, or the frame transmission through exercising of the low-delay transmission priority right cannot be performed in a case that "prohibited" notification is provided. The frame transmission through exercising of the low-delay transmission priority right may be determined to be impossible in a state of "stopped", "paused", or the like indicating a not-allowed state other than the "prohibited" state.

The low-delay transmission priority right request may be included in an Association Request transmitted by the radio communication apparatus 2-1 for association with the radio communication apparatus 1-1, and the low-delay transmission priority right response may be included in an Association Response. Also, the low-delay transmission priority right utilization condition of the radio communication apparatus 1-1 that receives the low-delay transmission priority right request may be described in MIB, and the low-delay transmission priority right utilization condition of the radio communication apparatus 2-1 that transmits the low-delay transmission priority right request may also be described in MIB.

The radio communication apparatus 2-1 may transmit the low-delay transmission priority right change request (11-3) to the radio communication apparatus 1-1 and may change information related to the low-delay transmission priority right. The radio communication apparatus 1-1 determines whether to accept the change request from the radio communication apparatus 2-1 and transmits the low-delay transmission priority right change response (11-4) to the radio communication apparatus 2-1. The low-delay transmission priority right change response includes low-delay transmission priority right acquisition information indicating whether to allow the radio communication apparatus 2-1 to perform the low-delay transmission priority right under the conditions requested by the radio communication apparatus 2-1.

The radio communication apparatus 1-1 checks the low-delay transmission priority right identification field in the frame received from the radio communication apparatus 2-1 and monitors whether the low-delay transmission priority right utilization condition agreed in advance is satisfied. The radio communication apparatus 2-1 that has determined not to be able to comply with the low-delay transmission priority right utilization condition may be charged a penalty by the radio communication apparatus 1-1. The radio communication apparatus 1-1 transmits a low-delay transmission priority right change notification (11-5) including control information indicating a change in low-delay transmission priority right to the radio communication apparatus 2-1.

The radio communication apparatus 1-1 may transmit a low-delay transmission priority right change notification (11-5) even in a case that the radio communication apparatus 2-1 complies with the low-delay transmission priority right utilization condition. Also, in a case that it is determined that the low-delay transmission priority right cannot be allowed for a reason such as a significant increase in the number of frames transmitted and/or received inside the radio communication system and the number of frames transmitted and/or received in other proximal radio communication system, for example, the low-delay transmission priority right change notification (11-5) may be transmitted. The radio communication apparatus 1-1 may periodically transmit information for checking whether to use the low-delay transmission priority right to the radio communication apparatus 2-1. In a case that a response to the information for checking whether to use the low-delay transmission priority right does not include information indicating that the low-delay transmission priority right is to be used, the low-delay transmission priority right change notification may be provided, and the low-delay transmission priority right may be canceled.

The control information included in the low-delay transmission priority right change notification (11-5) may be an indication for invalidating the low-delay transmission priority right, and the low-delay transmission priority right of the radio communication apparatus 2-1 that has received the notification from the radio communication apparatus 1-1 may be invalidated. The invalidation may be temporary, and the low-delay transmission priority right may be validated again after elapse of a specific period of time. Alternatively, the low-delay transmission priority right may be validated again by receiving the low-delay transmission priority right change notification (11-5) including control information for validating the low-delay transmission priority right. In another example, the control information included in the low-delay transmission priority right change notification (11-5) may indicate a change in method of the low-delay transmission priority right. It is also possible to change priority by changing the method, and specifically, the priority is lowered by applying a change to transmission with DIFS with no backoff time. In this case, the priority is lower than that of PIFS but is higher than that of ordinary DIFS + random backoff time, and it is possible to acquire a radio medium (acquire TXOP) and to transmit a frame. Such an application of DIFS with no backoff time may be temporary, and the priority right of PIFS transmission may be validated again after elapse of a specific period of time. Alternatively, the priority right of PIFS transmission may be validated again by receiving the low-delay transmission priority right change notification (11-5) including the control information indicating transmission with PIFS as a method of the low-delay transmission priority right. In this manner, the penalty may be temporarily applied, and the application may be canceled after elapse of a specific period of time.

In a case that the acquired low-delay transmission priority right becomes not necessary, the radio communication apparatus 2-1 may actively declare that it does not use the low-delay transmission priority right through transmission of the low-delay transmission priority right cancellation notification to the radio communication apparatus 1-1.

The information related to the low-delay transmission priority right included in the low-delay transmission priority right request (11-1) transmitted by the radio communication apparatus 2-1 may include the number of frames transmitted by the radio communication apparatus 2-1 through exercising of the low-delay transmission priority right or a radio medium occupancy time after reception of the low-delay transmission priority right response (11-2). In this case, the radio communication apparatus 2-1 automatically invalidates (stops or expires) the low-delay transmission priority right after consumption of the allowed number of frames and the radio medium occupancy time.

The priority right for low-delay transmission has been called as a low-delay transmission priority right and described hitherto, in particular. However, the sequence described using FIG. 11 is not limited to the low-delay transmission priority right, in particular, and may be related to other priority rights. For example, there are a priority right for ensuring a radio channel, a priority right for ensuring a radio resource (resource unit), and the like.

### 2. Second Embodiment

Configurations of a radio communication system, an access point apparatus (or also referred to as a base station apparatus), and a station apparatus (or also referred to as a terminal apparatus) in a second embodiment may be similar to those in the first embodiment. In the first embodiment, an example of the method of the low-delay transmission priority right is frame transmission based on acquisition of a transmission right with PIFS. In the second embodiment, several types of priority right orders (priority rank order) may be provided for the low-delay transmission priority right, and which of the priority right order is to be used may be determined through negotiation between the base station apparatus and the terminal apparatus. Also, a procedure for changing the priority right order in accordance with a change in radio communication environment in the radio communication system may also be included.

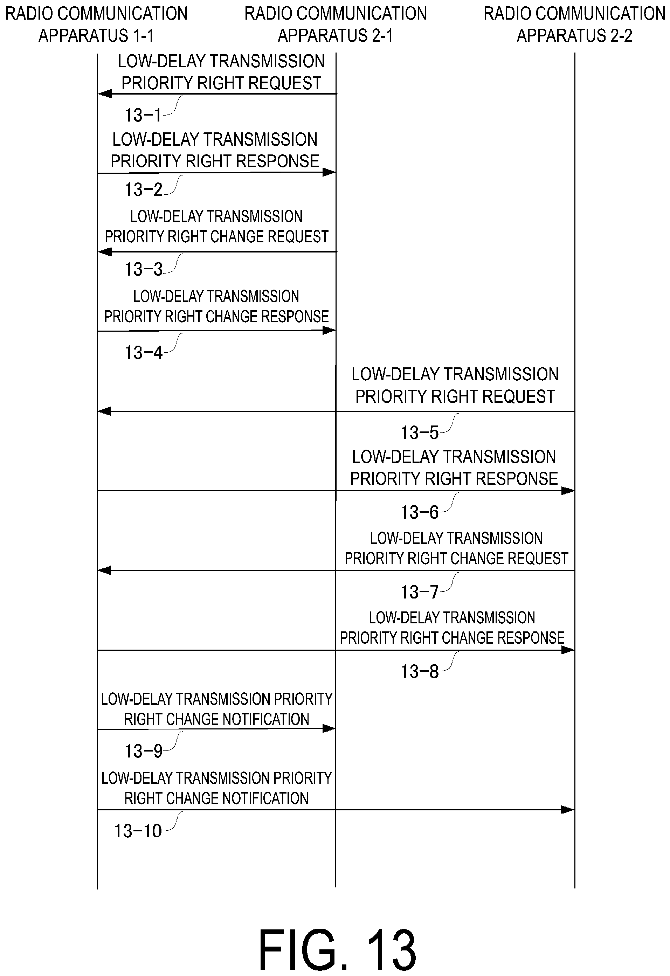

Moreover, a sequence diagram according to the low-delay transmission priority right in the second embodiment is similar to that in the first embodiment. As illustrated in FIG. 11, a low-delay transmission priority right request (11-1), a low-delay transmission priority right response (11-2), a low-delay transmission priority right change request (11-3), a low-delay transmission priority right change response (11-4), and a low-delay transmission priority right change notification (11-5) may be included. Furthermore, because the second embodiment is characterized in that each of the radio communication apparatuses 2A makes a request for and acquires a different priority right order and performs low-delay transmission, this will be described below using FIG. 13.

The second embodiment may be performed based entirely on first embodiment or may be performed based partially on the first embodiment (or a combination therewith). For example, the second embodiment may be performed by combining the low-delay transmission priority right utilization condition (a condition for limiting a radio medium occupancy rate such as the number of transmissions of a frame transmitted by exercising the low-delay transmission priority right per certain period of time and a radio medium occupancy time per certain period of time) described in the first embodiment or may be performed without using any low-delay transmission priority right utilization condition.

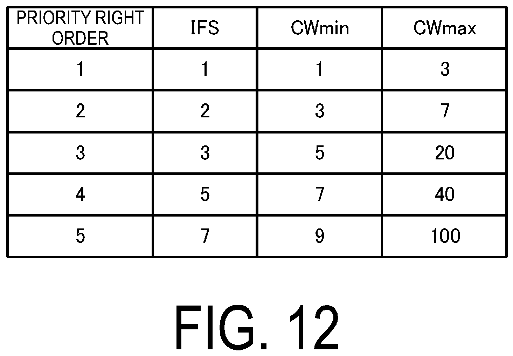

The priority right order may be summarized in a predetermined table in advance. FIG. 12 illustrates an example of a priority right table in a case that the number of priority right orders is five, and in this case, it is assumed that the priority right order 1 has the highest priority while the priority right order 5 has the lowest priority. In this example, the priority right orders are assumed to be characterized by three priority right parameters, namely frame interval (IFS), a minimum value CWmin of a contention window, and a maximum value CWmax of the contention window. Because the probability that the radio medium can be acquired increases as each value decreases, a priority right has higher priority. Note that although the number of priority right orders is 5 including the priority right orders 1 to 5, and the priority right parameters that characterize each priority right order are IFS, the minimum value CWmin of the contention window, and the maximum value CWmax of the contention window, in this example, the number of the priority right order may be any number, and the priority right parameter may be a combination other than the combination of IFS, CWmin, and CWmax, and other elements that affect the priority right may be added.

FIG. 13 illustrates a sequence diagram related to low-delay transmission priority right according to the present embodiment. FIG. 13 will be described by exemplifying two radio communication apparatuses 2A, namely the radio communication apparatus 2-1 and the radio communication apparatus 2-2. However, the number of the radio communication apparatuses 2A that perform a procedure related to low-delay transmission priority right on the radio communication apparatus 1-1 is not limited to two, and may be any number, or may be limited by an upper limit number defined by a radio communication system operation policy.

The radio communication apparatus 2-1 transmits a low-delay transmission priority right request (13-1) to the radio communication apparatus 1-1. The low-delay transmission priority right request may include information related to low-delay transmission priority right requested by the radio communication apparatus 2-1, which is, for example, information related to a priority right order illustrated in FIG. 12. Each of values of the priority right parameters (IFS, CWmin, CWmax, and the like) characterizing the priority right order are stored, and in this case, it is possible to provide a large variety of superiority or inferiority of priority that can be achieved by the low-delay transmission priority right while the number of bits to be allocated increases.

The radio communication apparatus 1-1 determines whether to accept the request from the radio communication apparatus 2-1 and transmits a low-delay transmission priority right response (13-2) to the radio communication apparatus 2-1. The low-delay transmission priority right response includes low-delay transmission priority right acquisition information indicating whether to allow the radio communication apparatus 2-1 to transmit the frame by exercising the low-delay transmission priority right, and may further include low-delay transmission priority right utilization condition information to be allowed for the radio communication apparatus 2-1.

Although the priority right order and the priority right parameters may be determined through signalling of the low-delay transmission priority right request (13-1) and the low-delay transmission priority right response (13-2) as described in the previous paragraph, at first, the low-delay transmission priority right may be performed using the priority right order and the priority right parameters individually determined by the radio communication apparatus 2-1 as they are for the purpose of reducing overhead due to negotiation and the like. Note that whether to perform the negotiation may be determined in accordance with the radio communication system operation policy.

The radio communication apparatus 2-1 checks low-delay transmission priority right acquisition information included in the low-delay transmission priority right response (13-2), the frame transmission by exercising the low-delay transmission priority right can be performed in a case that "allowed" notification is provided, or the frame transmission by exercising the low-delay transmission priority right cannot be performed in a case that "prohibited" notification is provided. The low-delay transmission priority right response (13-2) includes information related to the "allowed" (or "prohibited") priority right order and the priority right parameters.

The low-delay transmission priority right request may be included in an Association Request transmitted by the radio communication apparatus 2-1 for association with the radio communication apparatus 1-1, and the low-delay transmission priority right response may be included in an Association Response. Also, the low-delay transmission priority right utilization condition of the radio communication apparatus 1-1 that receives the low-delay transmission priority right request may be described in MIB, and the low-delay transmission priority right utilization condition of the radio communication apparatus 2-1 that transmits the low-delay transmission priority right request may also be described in MIB.

The radio communication apparatus 2-1 may transmit a low-delay transmission priority right change request (13-3) to the radio communication apparatus 1-1 and may change the information related to the low-delay transmission priority right, the priority right order, the priority right parameters, and the like. A priority right order number may be stored in the low-delay transmission priority right change request, or each of values of the priority right parameters (IFS, CWmin, CWmax, and the like) that characterize the priority right order may be stored therein.

In a case that the priority right order number is used, the information included in the low-delay transmission priority right change request may be information indicating how much the priority right order is relatively increased or decreased based on the priority right order number that is currently being performed. In a case that the radio communication apparatus 2-1 stores "plus 1" in the low-delay transmission priority right change request as information indicating that the priority right order is to be increased in a situation in which the priority right order "3" illustrated in FIG. 12 is being performed, for example, this means that the priority right order is to be changed from "3" to "4". On the contrary, in a case that "minus 1" is stored in the low-delay transmission priority right change request as information indicating that the priority right order is to be reduced, for example, the priority right order is changed from "3" to "2". In this manner, the priority right order may be changed by designating a relative value based on the priority right order that is currently being performed.

The radio communication apparatus 1-1 determines whether to accept a change request from the radio communication apparatus 2-1 and transmits a low-delay transmission priority right change response (13-4) to the radio communication apparatus 2-1. The low-delay transmission priority right change response may include low-delay transmission priority right acquisition information indicating whether to allow the low-delay transmission priority right of the radio communication apparatus 2-1 to be performed under conditions requested by the radio communication apparatus 2-1.

The radio communication apparatus 2-2 may also exchange a low-delay transmission priority right request (13-5), a low-delay transmission priority right response (13-6), a low-delay transmission priority right change request (13-7), and a low-delay transmission priority right change response (13-8) with the radio communication apparatus 1-1 as illustrated in FIG. 13, similarly to the radio communication apparatus 2-1. The priority right order performed by the radio communication apparatus 2-2 may be different from the priority right order performed by the radio communication apparatus 2-1. In a case that the table of the priority right order illustrated in FIG. 12 is used, the radio communication apparatus 2-1 may be allowed to perform the priority right order "1" in the low-delay transmission priority right response (13-2) while the radio communication apparatus 2-2 may be allowed to perform the priority right order "5" in the low-delay transmission priority right response (13-6). In this manner, superiority or inferiority of the priority right may be differentiated for each radio communication apparatus 2A that performs the low-delay transmission priority right. It is a matter of course that superiority or inferiority of the priority right may be differentiated by designating the priority right parameters instead of the priority right order.

The radio communication apparatus 1-1 may transmit a low-delay transmission priority right change notification to the radio communication apparatus 2A. FIG. 13 illustrates an example in which the radio communication apparatus 2-1 receives a low-delay transmission priority right change notification (13-9) while the radio communication apparatus 2-2 receives a low-delay transmission priority right change notification (13-10). In a case that it is determined that the low-delay transmission priority right cannot be allowed for a reason such as an increase in the number of frames to be transmitted and/or received in the radio communication system or in the number of frames to be transmitted and/or received in other proximal radio communication system, for example, the low-delay transmission priority right change notification (13-9, 13-10) may be transmitted.

Control information included in the low-delay transmission priority right change notification (13-9, 13-10) may be an indication for invalidating the low-delay transmission priority right, and the low-delay transmission priority right of the radio communication apparatuses 2-1 and 2-2 that have received the notification from the radio communication apparatus 1-1 may be invalidated. The invalidation may be temporary, and the low-delay transmission priority right may be validated again after elapse of a specific period of time. Alternatively, the low-delay transmission priority right may be validated again through reception of a low-delay transmission priority right change notification including control information for validating the low-delay transmission priority right. In another example, the control information included in the low-delay transmission priority right change notification may indicate a change in superiority or inferiority of the low-delay transmission priority right. Similarly to the aforementioned low-delay transmission priority right change requests (13-3, 13-7), the radio communication apparatuses 2-1 and 2-2 may be notified of a change in low-delay priority right by including the information related to the low-delay transmission priority right, the priority right order, and the priority right parameters in the low-delay transmission priority right change notifications (13-9, 13-10). The low-delay transmission priority right change notification may store the priority right order number or may store each of values of the priority right parameters (IFS, CWmin, CWmax, and the like) that characterize the priority right order.

In a case that the acquired low-delay transmission priority right becomes unnecessary, the radio communication apparatuses 2-1 and 2-2 may actively declare that the low-delay transmission priority right will not be used, by transmitting a low-delay transmission priority right cancellation notification to the radio communication apparatus 1-1.

### 3. Matters Common to All Embodiments

Although the communication apparatus according to the present invention can perform communication in a frequency band (frequency spectrum) that is a so-called unlicensed band that the communication apparatus does not need to be allowed by a nation or a region to use, the available frequency band is not limited thereto. The communication apparatus according to the present invention can exhibit its effect in a frequency band called a white band, which is actually not used for the purpose of preventing frequency jamming regardless of a nation or a region allowing utilization thereof for a specific service (for example, a frequency band allocated for television broadcasting or a frequency band which is not used depending on regions), or a shared spectrum (shared frequency band) which is expected to be shared by a plurality of service providers, for example.

A program that operates in the radio communication apparatus according to the present invention is a program (a program for causing a computer to function) for controlling the CPU or the like to implement the functions of the aforementioned embodiments related to the present invention. The information handled by these apparatuses is temporarily held in a RAM at the time of processing, is then stored in various types of ROMs and HDDs, and is read by the CPU as necessary to be corrected and written. Here, a semiconductor medium (ROM, a non-volatile memory card, or the like, for example), an optical recording medium (DVD, MO, MD, CD, BD, or the like, for example), a magnetic recording medium (magnetic tape, a flexible disk, or the like, for example), and the like can be given as examples of recording media for storing the programs. In addition to implementing the functions of the aforementioned embodiments by performing loaded programs, the functions of the present invention are implemented by the programs running cooperatively with an operating system, other application programs, or the like in accordance with indications included in those programs.

In a case of delivering these programs to market, the programs can be stored and distributed in a portable recording medium, or transferred to a server computer connected via a network such as the Internet. In this case, the storage device serving as the server computer is also included in the present invention. Also, a part or an entirety of the communication apparatus in the aforementioned embodiments may be implemented as an LSI that is typically an integrated circuit. The functional blocks of the communication apparatus may be individually implemented as chips or may be partially or completely integrated into a chip. In a case that the functional blocks are integrated, an integrated circuit controller for controlling them is added.

The circuit integration technique is not limited to LSI, and the integrated circuits for the functional blocks may be implemented as dedicated circuits or a general-purpose processor. Moreover, in a case that with advances in semiconductor technology, a circuit integration technology with which an LSI is replaced appears, it is also possible to use an integrated circuit based on the technology.

Note that the invention of the present application is not limited to the aforementioned embodiments. The radio communication apparatus according to the invention of the present application is not limited to the application in the mobile station apparatus, and, needless to say, can be applied to a fixed-type electronic apparatus installed indoors or outdoors, or a stationary-type electronic apparatus, for example, an AV apparatus, a kitchen apparatus, a cleaning or washing machine, an air-conditioning apparatus, office equipment, a vending machine, and other household apparatuses.

### Industrial Applicability

The present invention can be preferably used in a communication apparatus and a communication method.

### Reference Signs List

1-1, 1-2, 2-1 to 2-6, 2A, 2B Radio communication apparatus
3-1, 3-2 Management range
10-1 Radio communication apparatus
10001-1 Higher layer processor
10002-1 (Autonomous distributed) controller
10002a-1 CCA processor
10002b-1 Backoff processor
10002c-1 Transmission determiner
10003-1 Transmitter
10003a-1 Physical layer frame generator
10003b-1 Radio transmitter
10004-1 Receiver
10004a-1 Radio receiver
10004b-1 Signal demodulator
10004c-1 Evaluator
10005-1 Antenna
100-1, 100-3, 100-6, 100-11 Busy state
100-4, 100-7 Random backoff
100-2, 100-5, 100-8, 100-10 Radio frame

## Claims

1. A terminal apparatus (2-1) configured to communicate with a base station apparatus (1-1), the terminal apparatus comprising:
a transmitter configured to transmit a request frame (13-1) to the base station apparatus, wherein the request frame requests a priority right according to a higher layer service; and
a receiver configured to receive a response frame (13-2) from the base station apparatus, wherein the response frame includes (a) information indicating one of an acceptance of the priority right and a denial of the priority right and (b) a priority right parameter set,
wherein if the information in the response frame indicates the acceptance of the priority right, the transmitter is allowed to transmit a frame using the priority right parameter set,
the priority right parameter set is used for updating at least an interframe space, IFS, for frame transmission, a minimum value of a contention window, CWmin, for the frame transmission, and a maximum value of the contention window, CWmax, for the frame transmission.

2. The terminal apparatus according to claim 1,
wherein if the information in the response frame indicates the denial of the priority right, the transmitter is prohibited from transmitting the frame by using the priority right parameter set.

3. A base station apparatus (1-1) configured to communicate with a terminal apparatus (2-1), the base station apparatus comprising:
a receiver configured to receive a request frame (13-1) from the terminal apparatus, wherein the request frame requests a priority right according to a higher layer service; and
a transmitter configured to transmit a response frame (13-2) to the terminal apparatus, wherein the response frame includes (a) information indicating one of an acceptance of the priority right and a denial of the priority right and (b) a priority right parameter set,
wherein if the information in the response frame indicates the acceptance of the priority right, the terminal apparatus is allowed to transmit a frame using the priority right parameter set,
the priority right parameter set is used for updating at least an interframe space, IFS, for frame transmission, a minimum value of a contention window, CWmin, for the frame transmission, and a maximum value of the contention window, CWmax, for the frame transmission.

4. The base station apparatus according to claim 3,
wherein if the information in the response frame indicates the denial of the priority right, the terminal apparatus is prohibited from transmitting the frame by using the priority right parameter set.

5. A communication method used by a communication system including a base station apparatus (1-1) and a terminal apparatus (2-1) that communicates with the base station apparatus, the communication method comprising the steps of:
transmitting a request frame (13-1) from the terminal apparatus to the base station apparatus, wherein the request frame requests a priority right according to a higher layer service; and
transmitting a response frame (13-2) from the base station apparatus to the terminal apparatus, wherein the response frame includes (a) information indicating one of an acceptance of the priority right and a denial of the priority right and (b) a priority right parameter set,
wherein if the information in the response frame indicates the acceptance of the priority right, the terminal apparatus is allowed to transmit a frame using the priority right parameter set,
the priority right parameter set is used for updating at least an interframe space, IFS, for frame transmission, a minimum value of a contention window, CWmin, for the frame transmission, and a maximum value of the contention window, CWmax, for the frame transmission.

6. The terminal apparatus according to claim 1,
wherein the higher layer service is a service provided at a layer higher than a Medium Access Control Layer.

## Patentansprüche

1. Endgerätevorrichtung (2-1), die so konfiguriert ist, dass sie mit einer Basisstationsvorrichtung (1-1) kommuniziert, wobei die Endgerätevorrichtung aufweist:
einen Sender, der so konfiguriert ist, dass er einen Anfrage-Frame (13-1) an die Basisstationsvorrichtung sendet, wobei der Anfrage-Frame ein Prioritätsrecht gemäß einem Dienst einer höheren Schicht anfragt; und
einen Empfänger, der so konfiguriert ist, dass er einen Antwort-Frame (13-2) von der Basisstationsvorrichtung empfängt, wobei der Antwort-Frame (a) eine Information, die eine Akzeptanz des Prioritätsrechts oder eine Verweigerung des Prioritätsrechts angibt, und (b) einen Prioritätsrecht-Parametersatz enthält,
wobei, falls die Information im Antwort-Frame die Akzeptanz des Prioritätsrechts angibt, dem Sender erlaubt ist, einen Frame unter Verwendung des Prioritätsrecht-Parametersatzes zu senden,
der Prioritätsrecht-Parametersatz verwendet wird zum Aktualisieren
zumindest eines Interframe-Abstands, IFS, für eine Frame-Übertragung, eines minimalen Werts eines Konkurrenzfensters, CWmin, für die Frame-Übertragung und eines maximalen Werts des Konkurrenzfensters, CWmax, für die Frame-Übertragung.

2. Endgerätevorrichtung nach Anspruch 1,
wobei, falls die Information im Antwort-Frame die Verweigerung des Prioritätsrechts angibt, dem Sender verboten ist, den Frame zu senden, indem der Prioritätsrecht-Parametersatz verwendet wird.

3. Basisstationsvorrichtung (1-1), die so konfiguriert ist, dass sie mit einer Endgerätevorrichtung (2-1) kommuniziert, wobei die Basisstationsvorrichtung aufweist:
einen Empfänger, der so konfiguriert ist, dass er einen Anfrage-Frame (13-1) von der Endgerätevorrichtung empfängt, wobei der Anfrage-Frame ein Prioritätsrecht gemäß einem Dienst einer höheren Schicht anfragt; und
einen Sender, der so konfiguriert ist, dass er einen Antwort-Frame (13-2) an die Endgerätevorrichtung sendet, wobei der Antwort-Frame (a) eine Information, die eine Akzeptanz des Prioritätsrechts oder eine Verweigerung des Prioritätsrechts angibt, und (b) einen Prioritätsrecht-Parametersatz enthält,
wobei, falls die Information im Antwort-Frame die Akzeptanz des Prioritätsrechts angibt, der Endgerätevorrichtung erlaubt ist, einen Frame unter Verwendung des Prioritätsrecht-Parametersatzes zu senden,
der Prioritätsrecht-Parametersatz verwendet wird zum Aktualisieren
zumindest eines Interframe-Abstands, IFS, für eine Frame-Übertragung, eines minimalen Werts eines Konkurrenzfensters, CWmin, für die Frame-Übertragung und eines maximalen Werts des Konkurrenzfensters, CWmax, für die Frame-Übertragung.

4. Basisstationsvorrichtung nach Anspruch 3,
wobei, falls die Information im Antwort-Frame die Verweigerung des Prioritätsrechts angibt, der Endgerätevorrichtung verboten ist, den Frame zu senden, indem der Prioritätsrecht-Parametersatz verwendet wird.

5. Kommunikationsverfahren, das von einem Kommunikationssystem verwendet wird, das eine Basisstationsvorrichtung (1-1) und eine Endgerätevorrichtung (2-1) umfasst, die mit der Basisstationsvorrichtung kommuniziert, wobei das Kommunikationsverfahren die Schritte aufweist:
Senden eines Anfrage-Frames (13-1) von der Endgerätevorrichtung an die Basisstationsvorrichtung, wobei der Anfrage-Frame ein Prioritätsrecht gemäß einem Dienst einer höheren Schicht anfragt; und
Senden eines Antwort-Frames (13-2) von der Basisstationsvorrichtung an die Endgerätevorrichtung, wobei der Antwort-Frame (a) eine Information, die eine Akzeptanz des Prioritätsrechts oder eine Verweigerung des Prioritätsrechts angibt, und (b) einen Prioritätsrecht-Parametersatz enthält,
wobei, falls die Information im Antwort-Frame die Akzeptanz des Prioritätsrechts angibt, der Endgerätevorrichtung erlaubt ist, einen Frame unter Verwendung des Prioritätsrecht-Parametersatzes zu senden,
der Prioritätsrecht-Parametersatz verwendet wird zum Aktualisieren
zumindest eines Interframe-Abstands, IFS, für eine Frame-Übertragung, eines minimalen Werts eines Konkurrenzfensters, CWmin, für die Frame-Übertragung und eines maximalen Werts des Konkurrenzfensters, CWmax, für die Frame-Übertragung.

6. Endgerätevorrichtung nach Anspruch 1,
wobei es sich bei dem Dienst einer höheren Schicht um einen in einer höheren Schicht als einer Schicht zur Steuerung eines Medienzugriffs bereitgestellten Dienst handelt.

## Revendications

1. Appareil terminal (2-1) configuré pour communiquer avec un appareil de station de base (1-1), l'appareil terminal comprenant :
un émetteur configuré pour transmettre une trame de requête (13-1) à l'appareil de station de base, dans lequel la trame de requête demande un droit de priorité selon un service de couche supérieure ; et
un récepteur configuré pour recevoir une trame de réponse (13-2) en provenance de l'appareil de station de base, dans lequel la trame de réponse comporte (a) des informations indiquant l'un parmi une acceptation du droit de priorité et un refus du droit de priorité et (b) un jeu de paramètres de droit de priorité,
dans lequel si les informations dans la trame de réponse indiquent l'acceptation du droit de priorité, l'émetteur est autorisé à transmettre une trame en utilisant le jeu de paramètres de droit de priorité,
le jeu de paramètres de droit de priorité est utilisé pour mettre à jour au moins un espace inter-trame, IFS, pour une transmission de trame, une valeur minimale d'une fenêtre de contention, CWmin, pour la transmission de trame, et une valeur maximale de la fenêtre de contention, CWmax, pour la transmission de trame.

2. Appareil terminal selon la revendication 1, dans lequel si les informations dans la trame de réponse indiquent le refus du droit de priorité, l'émetteur n'est pas autorisé à transmettre la trame en utilisant le jeu de paramètres de droit de priorité.

3. Appareil de station de base (1-1) configuré pour communiquer avec un appareil terminal (2-1), l'appareil de station de base comprenant :
un récepteur configuré pour recevoir une trame de requête (13-1) provenant de l'appareil terminal, dans lequel la trame de requête demande un droit de priorité selon un service de couche supérieure ; et
un émetteur configuré pour transmettre une trame de réponse (13-2) à l'appareil terminal, dans lequel la trame de réponse comporte (a) des informations indiquant l'un parmi une acceptation du droit de priorité et un refus du droit de priorité et (b) un jeu de paramètres de droit de priorité,
dans lequel si les informations dans la trame de réponse indiquent l'acceptation du droit de priorité, l'appareil terminal est autorisé à transmettre une trame en utilisant le jeu de paramètres de droit de priorité,
le jeu de paramètres de droit de priorité est utilisé pour mettre à jour au moins un espace inter-trame, IFS, pour une transmission de trame, une valeur minimale d'une fenêtre de contention, CWmin, pour la transmission de trame, et une valeur maximale de la fenêtre de contention, CWmax, pour la transmission de trame.

4. Appareil de station de base selon la revendication 3,
dans lequel si les informations dans la trame de réponse indiquent le refus du droit de priorité, l'appareil terminal n'est pas autorisé à transmettre la trame en utilisant le jeu de paramètres de droit de priorité.

5. Procédé de communication utilisé par un système de communication comportant un appareil de station de base (1-1) et un appareil terminal (2-1) qui communique avec l'appareil de station de base, le procédé de communication comprenant les étapes de :
transmission d'une trame de requête (13-1) de l'appareil terminal à l'appareil de station de base, dans lequel la trame de requête demande un droit de priorité selon un service de couche supérieure ; et
transmission d'une trame de réponse (13-2) de l'appareil de station de base à l'appareil terminal, dans lequel la trame de réponse comporte (a) des informations indiquant l'un parmi une acceptation du droit de priorité et un refus du droit de priorité et (b) un jeu de paramètres de droit de priorité,
dans lequel si les informations dans la trame de réponse indiquent l'acceptation du droit de priorité, l'appareil terminal est autorisé à transmettre une trame en utilisant le jeu de paramètres de droit de priorité,
le jeu de paramètres de droit de priorité est utilisé pour mettre à jour au moins un espace inter-trame, IFS, pour une transmission de trame, une valeur minimale d'une fenêtre de contention, CWmin, pour la transmission de trame, et une valeur maximale de la fenêtre de contention, CWmax, pour la transmission de trame.

6. Appareil terminal selon la revendication 1, dans lequel le service de couche supérieure est un service fourni à une couche supérieure à une couche de commande d'accès au support.
